# EUROPEAN PATENT APPLICATION

(11) **EP 4 614 712 A1**
(43) Date of publication of application: **10.09.2025**
(21) Application number: 23885771.8
(22) Date of filing: 31.10.2023
(51) Int. Cl.: H01M 50/443, H01M 50/403, H01M 50/434, H01M 50/451, H01M 50/489

(54) **COMPOSITION FOR ELECTROCHEMICAL ELEMENT FUNCTIONAL LAYER, COMPOSITION PRECURSOR FOR ELECTROCHEMICAL ELEMENT FUNCTIONAL LAYER, ELECTROCHEMICAL ELEMENT FUNCTIONAL LAYER, LAMINATE FOR ELECTROCHEMICAL ELEMENT, AND ELECTROCHEMICAL ELEMENT**

(30) Priority: 31.10.2022 JP 2022175116
(71) Applicant: Zeon Corporation, Tokyo 100-8246 (JP)
(72) Inventor: ASADA, Ryota, Tokyo 100-8246 (JP); ADACHI, Yusuke, Tokyo 100-8246 (JP)
(74) Representative: Maiwald GmbH
(86) International application number: PCT/JP2023/039309
(87) International publication number: WO 2024/096017

(57) **Abstract**

Provided is a composition for an electrochemical device functional layer with which it is possible to form a functional layer that has excellent wet adhesiveness and that is capable of good inhibition of metal deposition on an electrode during charging and discharging and swelling of an electrochemical device. The composition for an electrochemical device functional layer contains a particulate polymer including a structural unit that includes a group having an aromatic ring where at least one hydrogen atom is substituted with a hydroxy group.

## Description

### TECHNICAL FIELD

The present disclosure relates to a composition for an electrochemical device functional layer, a composition precursor for an electrochemical device functional layer, a functional layer for an electrochemical device, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications. For example, a lithium ion secondary battery generally includes battery members such as a positive electrode, a negative electrode, and a separator that isolates the positive electrode and the negative electrode from each other and prevents short circuiting between the positive and negative electrodes.

Constituent members that include a porous membrane layer for improving heat resistance and strength, an adhesive layer for adhering battery members to each other, or the like (hereinafter, such layers are referred to using the general term "functional layer") are used in electrochemical devices such as lithium ion secondary batteries. Specifically, electrodes that further include a functional layer formed on an electrode substrate in which an electrode mixed material layer is provided on a current collector and separators that include a functional layer formed on a separator substrate are used as battery members. In recent years, further improvements to functional layers have been studied with the aim of further increasing the performance of electrochemical devices such as lithium ion secondary batteries.

For example, Patent Literature (PTL) 1 proposes reducing the internal resistance of a non-aqueous battery such as a lithium secondary battery by providing a specific electrolyte-swellable resin layer as a functional layer on a separator substrate. Specifically, PTL 1 proposes a separator for a non-aqueous battery in which an electrolyte-swellable resin layer that is formed of a urethane resin obtained by reacting a specific vinyl polymer, a specific polyol, and polyisocyanate is formed on at least one side of a substrate layer that is formed of a fiber aggregate.

### CITATION LIST

### Patent Literature

PTL 1: WO2012/056890A1

### SUMMARY

### (Technical Problem)

However, an electrochemical device such as a lithium secondary battery including a functional layer obtained by the conventional technique described above suffers from a problem that deposition of metal such as lithium on an electrode during charging and discharging cannot be sufficiently inhibited and that short circuiting between electrodes caused by metal deposition cannot be sufficiently inhibited, and also suffers from a problem that swelling of the electrochemical device in accompaniment to charging and discharging cannot be sufficiently inhibited. Moreover, a functional layer obtained by the conventional technique described above also leaves room for further improvement in terms of adhesiveness after immersion in electrolyte solution (hereinafter, also referred to simply as "wet adhesiveness").

Accordingly, one object of the present disclosure is to provide a composition for an electrochemical device functional layer with which it is possible to form a functional layer that has excellent wet adhesiveness and that is capable of good inhibition of metal deposition on an electrode during charging and discharging and swelling of an electrochemical device.

Another object of the present disclosure is to provide a composition precursor for an electrochemical device functional layer with which it is possible to suitably obtain this composition for an electrochemical device functional layer.

Another object of the present disclosure is to provide a functional layer for an electrochemical device that has excellent wet adhesiveness and that is capable of good inhibition of metal deposition on an electrode during charging and discharging and swelling of an electrochemical device.

Another object of the present disclosure is to provide a laminate for an electrochemical device in which this functional layer for an electrochemical device is stacked on a substrate.

Another object of the present disclosure is to provide an electrochemical device that includes this functional layer for an electrochemical device.

### (Solution to Problem)

The inventors conducted diligent investigation with the aim of solving the problems described above. The inventors discovered that the problems described above can be solved by using a composition for an electrochemical device functional layer that contains a particulate polymer including a structural unit that includes a group having an aromatic ring where at least one hydrogen atom is substituted with a hydroxy group (hereinafter, also referred to simply as a "hydroxy group-substituted aromatic ring-containing structural unit") and also discovered that a composition for an electrochemical device functional layer containing this particulate polymer can easily be obtained through reduction treatment of a composition that contains a particulate polymer precursor including a monomer unit that includes a group having an aromatic ring where at least one hydrogen atom is substituted with an alkoxy group (hereinafter, also referred to simply as an "alkoxy group-substituted aromatic ring-containing monomer unit"). In this manner, the inventors completed the present disclosure.

Specifically, with the aim of advantageously solving the problems set forth above, [1] a presently disclosed composition for an electrochemical device functional layer comprises a particulate polymer, wherein the particulate polymer includes a structural unit that includes a group having an aromatic ring where at least one hydrogen atom is substituted with a hydroxy group.

By using a composition for an electrochemical device functional layer such as set forth above, it is possible to obtain a functional layer that has excellent wet adhesiveness and that is capable of good inhibition of metal deposition on an electrode during charging and discharging and swelling of an electrochemical device.

Note that the presence or absence of a specific structural unit or monomer unit in a particulate polymer can be judged by a nuclear magnetic resonance (NMR) method such as ¹H-NMR.

[2] In the composition for an electrochemical device functional layer according to the foregoing [1], the particulate polymer preferably has a degree of swelling in electrolyte solution of not less than 100% and not more than 1,000%.

When the degree of swelling in electrolyte solution of the particulate polymer is not less than the lower limit set forth above, metal deposition on an electrode during charging and discharging can be even further inhibited. On the other hand, when the degree of swelling in electrolyte solution of the particulate polymer is not more than the upper limit set forth above, swelling of an obtained electrochemical device can be even further inhibited.

Note that the "degree of swelling in electrolyte solution of a particulate polymer" referred to in the present disclosure can be measured by a method described in the EXAMPLES section.

[3] In the composition for an electrochemical device functional layer according to the foregoing [1] or [2], tetrahydrofuran-soluble content of the particulate polymer preferably has a weight-average molecular weight of not less than 1,000 and not more than 500,000.

When the weight-average molecular weight of tetrahydrofuran-soluble content of the particulate polymer is within the specific range set forth above, wet adhesiveness of an obtained functional layer can be even further improved, and swelling of an obtained electrochemical device can be even further inhibited.

Note that the "weight-average molecular weight of tetrahydrofuran-soluble content of a particulate polymer" referred to in the present disclosure can be measured by a method described in the EXAMPLES section.

[4] In the composition for an electrochemical device functional layer according to any one of the foregoing [1] to [3], the particulate polymer preferably has a glass-transition temperature of not lower than 0°C and not higher than 90°C.

When the glass-transition temperature of the particulate polymer is not lower than the lower limit set forth above, destabilization of polymer particles during production of the particulate polymer and coarsening of some of these particles can be inhibited. On the other hand, when the glass-transition temperature of the particulate polymer is not higher than the upper limit set forth above, wet adhesiveness of an obtained functional layer can be even further improved.

Note that the "glass-transition temperature of a particulate polymer" referred to in the present disclosure can be measured by a method described in the EXAMPLES section.

[5] In the composition for an electrochemical device functional layer according to any one of the foregoing [1] to [4], the particulate polymer preferably includes the structural unit that includes a group having an aromatic ring where at least one hydrogen atom is substituted with a hydroxy group in a proportion of not less than 1 mass% and not more than 50 mass%.

When the particulate polymer includes the structural unit that includes a group having an aromatic ring where at least one hydrogen atom is substituted with a hydroxy group in a proportion that is not less than the lower limit set forth above, wet adhesiveness of an obtained functional layer can be even further improved. On the other hand, when the particulate polymer includes the structural unit that includes a group having an aromatic ring where at least one hydrogen atom is substituted with a hydroxy group in a proportion that is not more than the upper limit set forth above, metal deposition on an electrode during charging and discharging can be even further inhibited.

Note that the proportional content (mass%) of each monomer unit or structural unit referred to in the present disclosure can be measured by a nuclear magnetic resonance (NMR) method such as ¹H-NMR.

[6] In the composition for an electrochemical device functional layer according to any one of the foregoing [1] to [5], the particulate polymer preferably further includes a cross-linkable monomer unit.

When the particulate polymer further includes a cross-linkable monomer unit, wet adhesiveness of an obtained functional layer can be even further improved, and metal deposition on an electrode during charging and discharging can be even further inhibited.

Note that when a particulate polymer is said to "include a monomer unit" in the present disclosure, this means that "a repeating unit derived from that monomer is included in a particulate polymer obtained using the monomer".

[7] The composition for an electrochemical device functional layer according to any one of the foregoing [1] to [6] preferably further comprises heat-resistant particles. When the composition for an electrochemical device functional layer further contains heat-resistant particles, a functional layer having excellent heat resistance can be formed, and, as a result, heat resistance of an electrochemical device can be increased.

Moreover, with the aim of advantageously solving the problems set forth above, [8] a presently disclosed composition precursor for an electrochemical device functional layer comprises a particulate polymer precursor including a monomer unit that includes a group having an aromatic ring where at least one hydrogen atom is substituted with an alkoxy group.

By using a composition precursor for an electrochemical device functional layer such as set forth above, it is possible to suitably obtain a composition for an electrochemical device functional layer that contains a particulate polymer including a hydroxy group-substituted aromatic ring-containing structural unit by converting an alkoxy group of the particulate polymer precursor to a hydroxy group.

Furthermore, with the aim of advantageously solving the problems set forth above, [9] a presently disclosed functional layer for an electrochemical device is formed using the composition for an electrochemical device functional layer according to any one of the foregoing [1] to [7].

A functional layer for an electrochemical device such as set forth above has excellent wet adhesiveness and can inhibit metal deposition on an electrode during charging and discharging and swelling of an electrochemical device.

Also, with the aim of advantageously solving the problems set forth above, [10] a presently disclosed laminate for an electrochemical device comprises the functional layer for an electrochemical device according to the foregoing [9], stacked on a substrate.

A laminate for an electrochemical device such as set forth above can inhibit metal deposition on an electrode during charging and discharging. The laminate for an electrochemical device can also inhibit swelling of an electrochemical device that includes the laminate for an electrochemical device.

Moreover, with the aim of advantageously solving the problems set forth above, [11] a presently disclosed electrochemical device comprises the functional layer for an electrochemical device according to the foregoing [9].

An electrochemical device such as set forth above can inhibit metal deposition on an electrode during charging and discharging and can also inhibit swelling.

### (Advantageous Effect)

According to the present disclosure, it is possible to provide a composition for an electrochemical device functional layer with which it is possible to form a functional layer that has excellent wet adhesiveness and that is capable of good inhibition of metal deposition on an electrode during charging and discharging and swelling of an electrochemical device. Moreover, according to the present disclosure, it is possible to provide a composition precursor for an electrochemical device functional layer with which it is possible to suitably obtain this composition for an electrochemical device functional layer.

Furthermore, according to the present disclosure, it is possible to provide a functional layer for an electrochemical device that has excellent wet adhesiveness and that is capable of good inhibition of metal deposition on an electrode during charging and discharging and swelling of an electrochemical device.

Also, according to the present disclosure, it is possible to provide a laminate for an electrochemical device in which this functional layer for an electrochemical device is stacked on a substrate.

Moreover, according to the present disclosure, it is possible to provide an electrochemical device that includes this functional layer for an electrochemical device.

### DETAILED DESCRIPTION

The following provides a detailed description of embodiments of the present disclosure.

The presently disclosed composition for an electrochemical device functional layer can be used in formation of a functional layer for an electrochemical device that is included in the presently disclosed laminate for an electrochemical device. The presently disclosed composition precursor for an electrochemical device functional layer can be used to obtain the presently disclosed composition for an electrochemical device functional layer. The presently disclosed laminate for an electrochemical device includes a functional layer that has been formed using the presently disclosed composition for an electrochemical device functional layer. Moreover, the presently disclosed electrochemical device includes the presently disclosed functional layer for an electrochemical device.

### (Composition for electrochemical device functional layer)

The presently disclosed composition for an electrochemical device functional layer contains a specific particulate polymer and can optionally further contain one or more components selected from the group consisting of a binder, heat-resistant particles, other components, and a dispersion medium. By using the presently disclosed composition for an electrochemical device functional layer, it is possible to form a functional layer for an electrochemical device that has excellent wet adhesiveness and that is capable of good inhibition of metal deposition on an electrode during charging and discharging and swelling of an electrochemical device. Note that the presently disclosed composition for an electrochemical device functional layer is normally a slurry composition having the aforementioned components dispersed in a dispersion medium such as water.

### <Particulate polymer>

As described in detail below, the particulate polymer that is contained in the presently disclosed composition for an electrochemical device functional layer is a polymer that includes a specific structural unit as a repeating unit and that has a particulate form in the composition for an electrochemical device functional layer. Note that the particulate polymer may have a particulate form or may have any other form after members have been adhered via a functional layer formed using the composition for an electrochemical device functional layer. Moreover, the particulate polymer may be a crystalline macromolecular polymer, an amorphous macromolecular polymer, or a mixture thereof.

Furthermore, the particulate polymer may be a block polymer or a random polymer, but is preferably a random polymer.

### <<Chemical composition>>

The particulate polymer includes a hydroxy group-substituted aromatic ring-containing structural unit as a repeating unit and can optionally further include other monomer units as repeating units.

### [Hydroxy group-substituted aromatic ring-containing structural unit]

As previously described, the hydroxy group-substituted aromatic ring-containing structural unit in the present disclosure is a structural unit that includes a group having an aromatic ring where at least one hydrogen atom is substituted with a hydroxy group. In an electrochemical device that includes a functional layer formed using the presently disclosed composition for an electrochemical device functional layer, a hydroxy group of the hydroxy group-substituted aromatic ring-containing structural unit that is included in the particulate polymer is presumed to inhibit metal deposition on an electrode during charging and discharging by trapping a metal ion, such as a metal ion that has eluted from a positive electrode active material (for example, a cobalt ion, a nickel ion, or a manganese ion). Examples of methods by which the hydroxy group-substituted aromatic ring-containing structural unit is introduced into the particulate polymer include the following methods (1) and (2), but are not specifically limited thereto.
(1) A method in which the particulate polymer is produced from a monomer composition containing a hydroxy group-substituted aromatic ring-containing monomer that has at least one ethylenically unsaturated bond and that has at least one aromatic ring where at least one hydrogen atom is substituted with a hydroxy group (i.e., a monomer that includes a group having an aromatic ring where at least one hydrogen atom is substituted with a hydroxy group)
(2) A method in which a particulate polymer precursor including a monomer unit that includes a group having at least one aromatic ring where at least one hydrogen atom is substituted with an alkoxy group (i.e., an alkoxy group-substituted aromatic ring-containing monomer unit) is produced and then an alkoxy group of the alkoxy group-substituted aromatic ring-containing monomer unit in the particulate polymer precursor is converted to a hydroxy group

Of these methods, method (2) is preferable.

Examples of hydroxy group-substituted aromatic ring-containing monomers that can form a hydroxy group-substituted aromatic ring-containing structural unit in method (1) include, but are not specifically limited to, monomers that have at least one ethylenically unsaturated bond and that have at least one aromatic ring where at least one hydrogen atom is substituted with a hydroxy group. Specifically, a monomer that has one ethylenically unsaturated bond and one aromatic ring where at least one hydrogen atom is substituted with a hydroxy group may be used, for example.

The aromatic ring that is substituted with a hydroxy group may be an aromatic ring having a carbon number of not less than 6 and not more than 18 such as a benzene ring, a naphthalene ring, or an anthracene ring, for example, but is not specifically limited thereto. Of these aromatic rings, a benzene ring is preferable.

Examples of monomers that have one ethylenically unsaturated bond and one aromatic ring where at least one hydrogen atom is substituted with a hydroxy group include, but are not specifically limited to, hydroxystyrenes such as o-hydroxystyrene, m-hydroxystyrene, p-hydroxystyrene, 2,3-dihydroxystyrene, 2,4-dihydroxystyrene, 2,5-dihydroxystyrene, 2,6-dihydroxystyrene, 3,4-dihydroxystyrene (4-vinylcatechol), 2,3,4-trihydroxystyrene, 2,4,6-trihydroxystyrene, 3,4,5-trihydroxystyrene, 2,3,4,5-tetrahydroxystyrene, and pentahydroxystyrene; hydroxyvinylnaphthalenes such as 1-vinyl-2-naphthol, 1-vinyl-2,3-dihydroxynaphthalene, 1-vinyl-2,3,4-trihydroxynaphthalene, 1-vinyl-2,3,5-trihydroxynaphthalene, 1-vinyl-3,4,5-trihydroxynaphthalene, 1-vinyl-2,3,4,5-tetrahydroxynaphthalene, 1-vinyl-2,3,4,5,6-pentahydroxynaphthalene, 1-vinyl-2,3,4,5,6,7-hexahydroxynaphthalene, and 1-vinyl-2,3,4,5,6,7,8-heptahydroxynaphthalene; and hydroxyvinylanthracenes such as 1-vinyl-2-hydroxyanthracene, 1-vinyl-2,3-dihydroxyanthracene, 1-vinyl-3,4-dihydroxyanthracene, 1-vinyl-4,10-dihydroxyanthracene, 1-vinyl-5,10-dihydroxyanthracene, 1-vinyl-6,7-dihydroxyanthracene, 1-vinyl-2,3,4-trihydroxyanthracene, 1-vinyl-3,4,10-trihydroxyanthracene, 1-vinyl-4,5,10-trihydroxyanthracene, 1-vinyl-5,6,7-trihydroxyanthracene, 1-vinyl-7,8,9-trihydroxyanthracene, 1-vinyl-2,3,4,10-tetrahydroxyanthracene, 1-vinyl-5,6,7,8-tetrahydroxyanthracene, 1-vinyl-2,3,4,5,10-pentahydroxyanthracene, 1-vinyl-2,3,4,5,6,10-hexahydroxyanthracene, 1-vinyl-2,3,4,5,6,7,10-heptahydroxyanthracene, 1-vinyl-2,3,4,5,6,7,8,10-octahydroxyanthracene, and 1-vinyl-2,3,4,5,6,7,8,9,10-nonahydroxyanthracene. One of these hydroxy group-substituted aromatic ring-containing monomers may be used individually, or two or more of these hydroxy group-substituted aromatic ring-containing monomers may be used in combination in a freely selected ratio.

Of these hydroxy group-substituted aromatic ring-containing monomers, monomers that have one ethylenically unsaturated bond and one aromatic ring where at least one hydrogen atom is substituted with a hydroxy group are preferable as hydroxy group-substituted aromatic ring-containing monomers that can form a hydroxy group-substituted aromatic ring-containing structural unit from a viewpoint of even further improving wet adhesiveness of an obtained functional layer while also even further inhibiting metal deposition on an electrode during charging and discharging and swelling of an electrochemical device, monomers that have one ethylenically unsaturated bond and one aromatic ring where two hydrogen atoms are substituted with hydroxy groups are more preferable, monomers that have one ethylenically unsaturated bond and one aromatic ring where hydrogen atoms bonded to two adjacent carbon atoms are substituted with hydroxy groups are even more preferable from a viewpoint of setting an appropriate distance between two hydroxy groups and more easily trapping metal ions, and 3,4-dihydroxystyrene (4-vinylcatechol) is particularly preferable.

Moreover, no specific limitations are placed on alkoxy group-substituted aromatic ring-containing monomers (monomers that include a group having at least one aromatic ring where at least one hydrogen atom is substituted with an alkoxy group) that can form an alkoxy group-substituted aromatic ring-containing monomer unit in the particulate polymer precursor in method (2) so long as an alkoxy group of the alkoxy group-substituted aromatic ring-containing monomer unit in the particulate polymer precursor can be converted to a hydroxy group to obtain the particulate polymer. For example, a monomer that has at least one ethylenically unsaturated bond and that has at least one aromatic ring where at least one hydrogen atom is substituted with an alkoxy group may be used. Specifically, examples of alkoxy group-substituted aromatic ring-containing monomers that can form an alkoxy group-substituted aromatic ring-containing monomer unit include monomers that have one ethylenically unsaturated bond and one aromatic ring where at least one hydrogen atom is substituted with an alkoxy group.

The aromatic ring that is substituted with an alkoxy group may be an aromatic ring having a carbon number of not less than 6 and not more than 18 such as a benzene ring, a naphthalene ring, or an anthracene ring, for example, but is not specifically limited thereto. Of these aromatic rings, a benzene ring is preferable.

Examples of monomers that have one ethylenically unsaturated bond and one aromatic ring where at least one hydrogen atom is substituted with an alkoxy group include, but are not specifically limited to, alkoxystyrenes such as o-alkoxystyrene, m-alkoxystyrene, p-alkoxystyrene, 2,3-dialkoxystyrene, 2,4-dialkoxystyrene, 2,5-dialkoxystyrene, 2,6-dialkoxystyrene, 3,4-dialkoxystyrene, 2,3,4-trialkoxystyrene, 2,4,6-trialkoxystyrene, 3,4,5-trialkoxystyrene, 2,3,4,5-tetraalkoxystyrene, and pentaalkoxystyrene; alkoxyvinylnaphthalenes such as 1-vinyl-2-alkoxynaphthalene, 1-vinyl-2,3-dialkoxynaphthalene, 1-vinyl-2,3,4-trialkoxynaphthalene, 1-vinyl-2,3,5-trialkoxynaphthalene, 1-vinyl-3,4,5-trialkoxynaphthalene, 1-vinyl-2,3,4,5-tetraalkoxynaphthalene, 1-vinyl-2,3,4,5,6-pentaalkoxynaphthalene, 1-vinyl-2,3,4,5,6,7-hexaalkoxynaphthalene, and 1-vinyl-2,3,4,5,6,7,8-heptaalkoxynaphthalene; and alkoxyvinylanthracenes such as 1-vinyl-2-alkoxyanthracene, 1-vinyl-2,3-dialkoxyanthracene, 1-vinyl-3,4-dialkoxyanthracene, 1-vinyl-4,10-dialkoxyanthracene, 1-vinyl-5,10-dialkoxyanthracene, 1-vinyl-6,7-dialkoxyanthracene, 1-vinyl-2,3,4-trialkoxyanthracene, 1-vinyl-3,4,10-trialkoxyanthracene, 1-vinyl-4,5,10-trialkoxyanthracene, 1-vinyl-5,6,7-trialkoxyanthracene, 1-vinyl-7,8,9-trialkoxyanthracene, 1-vinyl-2,3,4,10-tetraalkoxyanthracene, 1-vinyl-5,6,7,8-tetraalkoxyanthracene, 1-vinyl-2,3,4,5,10-pentaalkoxyanthracene, 1-vinyl-2,3,4,5,6,10-hexaalkoxyanthracene, 1-vinyl-2,3,4,5,6,7,10-heptaalkoxyanthracene, 1-vinyl-2,3,4,5,6,7,8,10-octaalkoxyanthracene, and 1-vinyl-2,3,4,5,6,7,8,9,10-nonaalkoxyanthracene. One of these alkoxy group-substituted aromatic ring-containing monomers may be used individually, or two or more of these alkoxy group-substituted aromatic ring-containing monomers may be used in combination in a freely selected ratio.

The alkoxy group is not specifically limited so long as it can be converted to a hydroxy group. For example, an alkoxy group having a carbon number of not less than 1 and not more than 6 can be used. In particular, the alkoxy group is preferably a methoxy group from a viewpoint of ease of conversion to a hydroxy group. In a case in which the alkoxy group-substituted aromatic ring-containing monomer includes two or more alkoxy groups, the alkoxy groups may be the same or different, but are preferably all the same, and are more preferably all methoxy groups.

In particular, monomers that have one ethylenically unsaturated bond and one aromatic ring where at least one hydrogen atom is substituted with an alkoxy group are preferable, monomers that have one ethylenically unsaturated bond and one aromatic ring where two hydrogen atoms are substituted with alkoxy groups are more preferable, monomers that have one ethylenically unsaturated bond and one aromatic ring where hydrogen atoms bonded to two adjacent carbon atoms are substituted with alkoxy groups are even more preferable from a viewpoint of providing a suitable distance between two hydroxy groups and more easily trapping metal ions, 3,4-dialkoxystyrene is further preferable, and 3,4-dimethoxystyrene is particularly preferable as an alkoxy group-substituted aromatic ring-containing monomer.

No specific limitations are placed on the treatment by which an alkoxy group in the particulate polymer precursor is converted to a hydroxy group (hereinafter, also referred to simply as "hydroxy group substitution treatment"). For example, the treatment can be performed by reacting the alkoxy group with a Lewis acid in the presence of a solvent.

Boron tribromide, boron trichloride, aluminum tribromide, or the like can be used as the Lewis acid. One of these Lewis acids may be used individually, or two or more of these Lewis acids may be used in combination. The used amount of the Lewis acid is not specifically limited and can be set as approximately 1 molar equivalent to 5 molar equivalents relative to 1 mol of alkoxy groups.

A halogenated hydrocarbon such as dichloromethane, chloroform, or carbon tetrachloride, a hydrocarbon such as benzene or toluene, or the like can be used as the solvent without any specific limitations. One of these solvents may be used individually, or two or more of these solvents may be used in combination.

The reaction temperature is not specifically limited so long as sufficient alkoxy group to hydroxy group conversion is achieved and can be set as not lower than -20°C and not higher than 80°C. Moreover, the reaction time is not specifically limited so long as sufficient alkoxy group to hydroxy group conversion is achieved and can be set as not less than 15 minutes and not more than 24 hours, for example.

The conversion rate of alkoxy groups in the particulate polymer precursor to hydroxy groups (hydroxy group conversion rate) is normally 95 mol% or more, preferably 97 mol% or more, and more preferably 99 mol% or more.

A structural unit that is obtained through substitution of an alkoxy group of an alkoxy group-substituted aromatic ring-containing monomer unit with a hydroxy group in this manner is the same structural unit as a hydroxy group-substituted aromatic ring-containing structural unit such as previously described. As one specific example, a structural unit that is obtained through substitution of methoxy groups of a 3,4-dimethoxystyrene unit with hydroxy groups is the same structural unit as a 3,4-dihydroxystyrene (4-vinylcatechol) unit.

The hydroxy group-substituted aromatic ring-containing structural unit of the particulate polymer described above is particularly preferably a structural unit represented by the following structural formula.

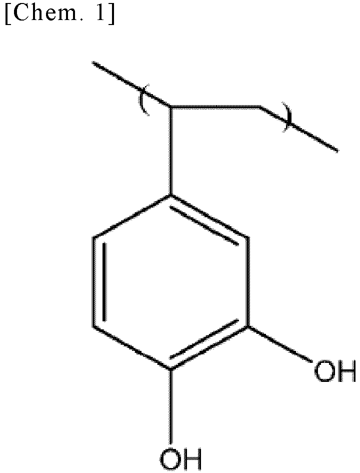

The proportional content of the hydroxy group-substituted aromatic ring-containing structural unit in the particulate polymer when the proportional content of all repeating units (structural units and monomer units) in the particulate polymer is taken to be 100 mass% is preferably 1 mass% or more, more preferably 2 mass% or more, and even more preferably 5 mass% or more, and is preferably 50 mass% or less, more preferably 45 mass% or less, and even more preferably 40 mass% or less.

When the proportional content of the hydroxy group-substituted aromatic ring-containing structural unit in the particulate polymer is within any of the ranges set forth above, wet adhesiveness of an obtained functional layer can be even further improved while also even further inhibiting metal deposition on an electrode during charging and discharging.

### [Other monomer units]

Examples of other monomer units that can optionally be included in the particulate polymer include, but are not specifically limited to, an aromatic vinyl monomer unit, a (meth)acrylic acid alkyl ester monomer unit, a glycidyl group-containing monomer unit, a cross-linkable monomer unit, a carboxy group-containing monomer unit, an amide group-containing monomer unit, and a cyano group-containing monomer unit. From a viewpoint of even further improving wet adhesiveness of an obtained functional layer while also even further inhibiting metal deposition on an electrode during charging and discharging, it is preferable that the particulate polymer further includes a cross-linkable monomer unit.

### -Aromatic vinyl monomer unit-

Examples of aromatic vinyl monomers that can form an aromatic vinyl monomer unit include styrene, α-methylstyrene, styrene sulfonic acid, butoxystyrene, and vinylnaphthalene, of which, styrene is preferable. Note that one of these aromatic vinyl monomers may be used individually, or two or more of these aromatic vinyl monomers may be used in combination in a freely selected ratio.

Also note that in the present disclosure, an "aromatic vinyl monomer unit" is considered to not be encompassed by the "hydroxy group-substituted aromatic ring-containing structural unit" described above.

The proportional content of an aromatic vinyl monomer unit in the particulate polymer when the proportional content of all repeating units (structural units and monomer units) in the particulate polymer is taken to be 100 mass% is preferably 15 mass% or more, and more preferably 35 mass% or more, and is preferably 60 mass% or less, and more preferably 50 mass% or less.

When the proportional content of an aromatic vinyl monomer unit in the particulate polymer is not less than any of the lower limits set forth above, wet adhesiveness of an obtained functional layer can be improved. Moreover, when the proportional content of an aromatic vinyl monomer unit in the particulate polymer is not more than any of the upper limits set forth above, flexibility of an obtained functional layer can be improved.

### -(Meth)acrylic acid alkyl ester monomer unit-

Examples of (meth)acrylic acid alkyl ester monomers that can form a (meth)acrylic acid alkyl ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid alkyl ester monomers, n-butyl acrylate is preferable. One of these (meth)acrylic acid alkyl ester monomers may be used individually, or two or more of these (meth)acrylic acid alkyl ester monomers may be used in combination in a freely selected ratio.

In the present disclosure, "(meth)acryl" is used to indicate "acryl" and/or "methacryl".

The proportional content of a (meth)acrylic acid alkyl ester monomer unit in the particulate polymer when the proportional content of all repeating units (structural units and monomer units) in the particulate polymer is taken to be 100 mass% is preferably 15 mass% or more, and more preferably 20 mass% or more, and is preferably 80 mass% or less, and more preferably 60 mass% or less.

When the proportional content of a (meth)acrylic acid alkyl ester monomer unit in the particulate polymer is not less than any of the lower limits set forth above, polymerization reactivity can be improved. Moreover, when the proportional content of a (meth)acrylic acid alkyl ester monomer unit in the particulate polymer is not more than any of the upper limits set forth above, wet adhesiveness of an obtained functional layer can be improved.

### -Glycidyl group-containing monomer unit-

Examples of glycidyl group-containing monomers that can form a glycidyl group-containing monomer unit include, but are not specifically limited to, allyl glycidyl ether, glycidyl (meth)acrylate, epoxy-9-decene, and epoxy-5-hexene. Note that in the present disclosure, "(meth)acrylate" is used to indicate "acrylate" and/or "methacrylate". In particular, glycidyl methacrylate is preferable as a glycidyl group-containing monomer from a viewpoint of inhibiting metal deposition on an electrode during charging and discharging and further improving wet adhesiveness of an obtained functional layer. One of these glycidyl group-containing monomers may be used individually, or two or more of these glycidyl group-containing monomers may be used in combination in a freely selected ratio.

The proportional content of a glycidyl group-containing monomer unit in the particulate polymer when the proportional content of all repeating units (structural units and monomer units) in the particulate polymer is taken to be 100 mass% is preferably 2 mass% or more, and more preferably 5 mass% or more, and is preferably 44 mass% or less, and more preferably 40 mass% or less. When the proportional content of a glycidyl group-containing monomer unit in the particulate polymer is not less than any of the lower limits set forth above, wet adhesiveness of an obtained functional layer can be yet further improved, and metal deposition on an electrode during charging and discharging can be yet further inhibited. Moreover, when the proportional content of a glycidyl group-containing monomer unit in the particulate polymer is not more than any of the upper limits set forth above, destabilization of polymer particles during production of the particulate polymer and coarsening of some of these particles can be inhibited.

### -Cross-linkable monomer unit-

Examples of cross-linkable monomers that can form a cross-linkable monomer unit include polyfunctional monomers having two or more groups displaying polymerization reactivity in the monomer. Examples of such polyfunctional monomers include (meth)acrylic acid allyl ester monomers such as allyl methacrylate; aromatic divinyl monomers such as divinylbenzene and divinylnaphthalene; di(meth)acrylic acid alkyl ester monomers such as diethylene glycol dimethacrylate, ethylene glycol dimethacrylate, diethylene glycol diacrylate, and 1,3-butylene glycol diacrylate; tri(meth)acrylic acid alkyl ester monomers such as trimethylolpropane trimethacrylate and trimethylolpropane triacrylate; and conjugated diene monomers such as 1,3-butadiene, isoprene, 2,3-dimethyl-1,3-butadiene, and 1,3-pentadiene.

Di(meth)acrylic acid alkyl ester monomers, conjugated diene monomers, and aromatic divinyl monomers are preferable as cross-linkable monomers that can form a cross-linkable monomer unit. In particular, divinylbenzene and ethylene glycol dimethacrylate are more preferable, and ethylene glycol dimethacrylate is even more preferable. Note that one of these cross-linkable monomers may be used individually, or two or more of these cross-linkable monomers may be used in combination in a freely selected ratio.

The proportional content of a cross-linkable monomer unit in the particulate polymer when the proportional content of all repeating units (structural units and monomer units) in the particulate polymer is taken to be 100 mass% is preferably 0.1 mass% or more, and more preferably 0.3 mass% or more, and is preferably 2 mass% or less, and more preferably 1 mass% or less. When the proportional content of a cross-linkable monomer unit in the particulate polymer is within any of the specific ranges set forth above, wet adhesiveness of an obtained functional layer can be even further improved.

### -Carboxy group-containing monomer unit-

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof. Examples of monocarboxylic acids include acrylic acid, methacrylic acid, and crotonic acid. Examples of derivatives of monocarboxylic acids include 2-ethylacrylic acid, isocrotonic acid, α-acetoxyacrylic acid, 3-trans-aryloxyacrylic acid, α-chloro-3-E-methoxyacrylic acid, and 3-diaminoacrylic acid. Examples of dicarboxylic acids include maleic acid, fumaric acid, and itaconic acid. Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride. One of these carboxy group-containing monomers may be used individually, or two or more of these carboxy group-containing monomers may be used in combination. Of these carboxy group-containing monomers, dicarboxylic acids, derivatives of dicarboxylic acids, and acid anhydrides thereof are preferable, and itaconic acid is more preferable.

The proportional content of a carboxy group-containing monomer unit in the particulate polymer when the proportional content of all repeating units (structural units and monomer units) in the particulate polymer is taken to be 100 mass% is preferably more than 0 mass%, and more preferably 0.5 mass% or more, and is preferably 30 mass% or less, and more preferably 25 mass% or less. When the proportional content of a carboxy group-containing monomer unit in the particulate polymer is within any of the specific ranges set forth above, stability during production of the composition for an electrochemical device functional layer can be improved.

### -Amide group-containing monomer unit-

Examples of amide group-containing monomers that can form an amide group-containing monomer unit include methacrylamide, acrylamide, dimethylacrylamide, diethylacrylamide, diacetone acrylamide, hydroxyethyl acrylamide, hydroxymethyl acrylamide, hydroxypropyl acrylamide, and hydroxybutyl acrylamide. One of these amide group-containing monomers may be used individually, or two or more of these amide group-containing monomers may be used in combination in a freely selected ratio. Of these amide group-containing monomers, acrylamide is preferable.

The proportional content of an amide group-containing monomer unit in the particulate polymer when the proportional content of all repeating units (structural units and monomer units) in the particulate polymer is taken to be 100 mass% is preferably more than 0 mass%, and more preferably 0.5 mass% or more, and is preferably 30 mass% or less, and more preferably 25 mass% or less. When the proportional content of an amide group-containing monomer unit in the particulate polymer is within any of the specific ranges set forth above, stability during production of the composition for an electrochemical device functional layer can be improved.

### -Cyano group-containing monomer unit-

Examples of cyano group-containing monomers that can form a cyano group-containing monomer unit include α,β-ethylenically unsaturated nitrile monomers. Specifically, any α,β-ethylenically unsaturated compound that has a nitrile group may be used as an α,β-ethylenically unsaturated nitrile monomer without any specific limitations, and examples thereof include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these cyano group-containing monomers, acrylonitrile is preferable.

Note that one of these cyano group-containing monomers may be used individually, or two or more of these cyano group-containing monomers may be used in combination in a freely selected ratio.

The proportional content of a cyano group-containing monomer unit in the particulate polymer when the proportional content of all repeating units (structural units and monomer units) in the particulate polymer is taken to be 100 mass% is preferably more than 0 mass%, and more preferably 0.5 mass% or more, and is preferably 30 mass% or less, and more preferably 25 mass% or less. When the proportional content of a cyano group-containing monomer unit in the particulate polymer is within any of the specific ranges set forth above, stability during production of the composition for an electrochemical device functional layer can be improved.

### <<Properties>>

### [Degree of swelling in electrolyte solution]

The degree of swelling in electrolyte solution of the particulate polymer is preferably 100% or more, more preferably 105% or more, even more preferably 150% or more, and particularly preferably 200% or more, and is preferably 1,000% or less, more preferably 800% or less, and even more preferably 500% or less.

When the degree of swelling in electrolyte solution of the particulate polymer is not less than any of the lower limits set forth above, metal deposition on an electrode during charging and discharging can be even further inhibited. On the other hand, when the degree of swelling in electrolyte solution of the particulate polymer is not more than any of the upper limits set forth above, swelling of an obtained electrochemical device can be even further inhibited.

The degree of swelling in electrolyte solution of the particulate polymer can be adjusted by altering the chemical composition of the particulate polymer, for example.

### [Weight-average molecular weight of tetrahydrofuran-soluble content]

The weight-average molecular weight of tetrahydrofuran-soluble content of the particulate polymer is preferably 1,000 or more, more preferably 3,000 or more, even more preferably 5,000 or more, and particularly preferably 30,000 or more, and is preferably 500,000 or less, more preferably 450,000 or less, and even more preferably 400,000 or less.

When the weight-average molecular weight of tetrahydrofuran-soluble content of the particulate polymer is within any of the specific ranges set forth above, wet adhesiveness of an obtained functional layer can be even further improved, and swelling of an obtained electrochemical device can be even further inhibited.

The weight-average molecular weight of tetrahydrofuran-soluble content of the particulate polymer can be adjusted by altering the production method or the production conditions of the particulate polymer, for example.

### [Glass-transition temperature]

The glass-transition temperature of the particulate polymer is preferably 0°C or higher, more preferably 20°C or higher, even more preferably 30°C or higher, and particularly preferably 52.4°C or higher, and is preferably 90°C or lower, more preferably 87°C or lower, and even more preferably 75°C or lower.

When the glass-transition temperature of the particulate polymer is not lower than any of the lower limits set forth above, destabilization of polymer particles during production of the particulate polymer and coarsening of some of these particles can be inhibited. On the other hand, when the glass-transition temperature of the particulate polymer is not higher than any of the upper limits set forth above, wet adhesiveness of an obtained functional layer can be even further improved.

The glass-transition temperature of the particulate polymer can be adjusted by altering the chemical composition of the particulate polymer, for example.

### [Volume-average particle diameter]

The volume-average particle diameter of the particulate polymer is preferably 1.2 µm or more, more preferably 1.5 µm or more, and even more preferably 3.5 µm or more, and is preferably 9.0 µm or less, and more preferably 8.5 µm or less. When the volume-average particle diameter of the particulate polymer is not less than any of the lower limits set forth above, this makes it easier for the particulate polymer to protrude relative to materials other than the particulate polymer and to come into contact with a battery member such as an electrode or a separator at a thickness direction surface of a functional layer formed using the composition for an electrochemical device functional layer, and, as a result, the functional layer can display excellent wet adhesiveness. On the other hand, when the volume-average particle diameter of the particulate polymer is not more than any of the upper limits set forth above, metal deposition on an electrode during charging and discharging can be even further inhibited.

Note that the volume-average particle diameter of the particulate polymer can be measured by a method described in the EXAMPLES section. The volume-average particle diameter of the particulate polymer can be adjusted through the type and amount of metal hydroxide used in production of the particulate polymer and through the production method and production conditions of the particulate polymer.

### <<Production of particulate polymer>>

In a case in which a particulate polymer having a hydroxy group-substituted aromatic ring-containing structural unit introduced by method (1) is to be produced, the particulate polymer can be produced through polymerization of a monomer composition containing a hydroxy group-substituted aromatic ring-containing monomer such as previously described, carried out in an aqueous solvent such as water, for example. The proportion constituted by each monomer in the monomer composition is normally the same as the proportion constituted by each monomer unit in the particulate polymer.

The method of polymerization is not specifically limited and may be a suspension polymerization method, an emulsion polymerization and aggregation method, a pulverization method, or the like, for example. In particular, a suspension polymerization method and an emulsion polymerization and aggregation method are preferable, and a suspension polymerization method is more preferable. Moreover, the polymerization reaction can be a reaction such as radical polymerization or living radical polymerization.

The following describes a method of producing the particulate polymer by suspension polymerization as one example.

### -Production of particulate polymer by suspension polymerization-[1] Production of monomer composition

First, monomers for forming the target particulate polymer and other compounding agents that are added as necessary (chain transfer agents, polymerization regulators, polymerization reaction retardants, reactive fluidizers, fillers, flame retardants, antioxidants, colorants, etc.) are mixed so as to produce a monomer composition.

### [2] Formation of droplets

Next, the monomer composition is dispersed in water, a polymerization initiator is added, and then droplets of the monomer composition are formed. No specific limitations are placed on the method by which the droplets are formed. For example, the droplets can be formed by using a disperser such as an emulsifying/dispersing device to perform shear stirring of the water containing the monomer composition.

The polymerization initiator that is used may be di(3,5,5-trimethylhexanoyl) peroxide, t-butyl peroxy-2-ethylhexanoate, azobisisobutyronitrile, or any other such polymerization initiator, for example. Note that the polymerization initiator may be added before droplet formation once the monomer composition has been dispersed in water or may be added to the monomer composition before dispersion thereof in water.

From a viewpoint of stabilizing droplets of the monomer composition that are formed in the water, it is preferable that a dispersion stabilizer is added to the water and that droplets of the monomer composition are then formed. The dispersion stabilizer may be sodium dodecylbenzenesulfonate, a metal hydroxide such as magnesium hydroxide, or the like, for example. The dispersion stabilizer may be added in the form of a colloidal dispersion liquid having the dispersion stabilizer dispersed in water, for example.

### [3] Polymerization

Once droplets of the monomer composition have been formed, the water containing the formed droplets is heated to initiate polymerization and thereby form a particulate polymer in the water. The reaction temperature in the polymerization is preferably not lower than 50°C and not higher than 95°C. Moreover, the reaction time in the polymerization is preferably not less than 1 hour and not more than 10 hours, and is more preferably 8 hours or less, and even more preferably 7 hours or less.

### [4] Washing, filtration, dehydration, and drying step

Once the polymerization has ended, the particulate polymer can be obtained by subjecting the water containing the particulate polymer to washing, filtration, and drying by standard methods.

In a case in which a particulate polymer having a hydroxy group-substituted aromatic ring-containing structural unit introduced by method (2) is to be produced, the particulate polymer precursor can be produced through polymerization of a monomer composition containing an alkoxy group-substituted aromatic ring-containing monomer such as previously described, carried out in an aqueous solvent such as water, for example. Note that production of the particulate polymer precursor can be performed by the same method as in production of the particulate polymer described above with the exception that a monomer composition containing an alkoxy group-substituted aromatic ring-containing monomer is used.

Treatment for converting an alkoxy group in the particulate polymer precursor to a hydroxy group in method (2) can be performed by reacting the alkoxy group with a Lewis acid in the presence of a solvent, for example, but is not specifically limited to being performed in this manner.

Boron tribromide, boron trichloride, aluminum tribromide, or the like can be used as the Lewis acid. One of these Lewis acids may be used individually, or two or more of these Lewis acids may be used in combination. The used amount of the Lewis acid is not specifically limited but can be set as approximately 1 molar equivalent to 5 molar equivalents relative to 1 mol of alkoxy groups.

A halogenated hydrocarbon such as dichloromethane, chloroform, or carbon tetrachloride, a hydrocarbon such as benzene or toluene, or the like can be used as the solvent without any specific limitations. One of these solvents may be used individually, or two or more of these solvents may be used in combination.

The reaction temperature is not specifically limited so long as sufficient alkoxy group to hydroxy group conversion is achieved and can be set as not lower than -20°C and not higher than 80°C. Moreover, the reaction time is not specifically limited so long as sufficient alkoxy group to hydroxy group conversion is achieved and can be set as not less than 15 minutes and not more than 24 hours, for example.

The conversion rate of alkoxy groups in the particulate polymer precursor to hydroxy groups (hydroxy group conversion rate) is normally 95 mol% or more, preferably 97 mol% or more, and more preferably 99 mol% or more.

### <Binder>

The presently disclosed composition for an electrochemical device functional layer can optionally further contain a binder. The further inclusion of a binder in the composition for a functional layer can improve wet adhesiveness.

### <<Chemical composition>>

Any known polymer that is used as a binder can be used as the binder without any specific limitations so long as it is a polymer that does not correspond to the particulate polymer described above. For example, the binder may be a conjugated diene polymer, an acrylic polymer, polyvinylidene fluoride (PVDF), polyvinyl alcohol (PVOH), or the like. One binder may be used individually, or two or more binders may be used in combination. The binder is preferably a polymer such as a conjugated diene polymer, an acrylic polymer, or polyvinylidene fluoride (PVDF) that is water-insoluble and that can be dispersed in a dispersion medium such as water, is more preferably a conjugated diene polymer or an acrylic polymer, and is even more preferably an acrylic polymer. Note that in a case in which the functional layer is to be adopted at the surface of a positive electrode in an electrochemical device, the binder is preferably a polymer other than a conjugated diene polymer. Also note that when a polymer is said to be "water-insoluble" in the present disclosure, this means that when 0.5 g of the polymer is dissolved in 100 g of water at a temperature of 25°C, insoluble content is 90 mass% or more.

Here, the term "conjugated diene polymer" refers to a polymer that includes a conjugated diene monomer unit. Specific examples of the conjugated diene polymer include, but are not specifically limited to, a copolymer including an aromatic vinyl monomer unit and an aliphatic conjugated diene monomer unit such as a styrene-butadiene copolymer (SBR); butadiene rubber (BR); acrylic rubber (NBR) (copolymer including an acrylonitrile unit and a butadiene unit); and hydrogenated products thereof. Moreover, examples of the conjugated diene monomer unit included in the conjugated diene polymer are the same as previously described in relation to the conjugated diene monomer unit that can be included in the particulate polymer.

The term "acrylic polymer" refers to a polymer that includes a (meth)acrylic acid alkyl ester monomer unit.

One of these binders may be used individually, or two or more of these binders may be used in combination in a freely selected ratio.

### <<Glass-transition temperature>>

The glass-transition temperature of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, wet adhesiveness can be further improved. On the other hand, when the glass-transition temperature of the binder is not higher than any of the upper limits set forth above, flexibility of a functional layer can be further increased.

### <<Content of binder>>

The content of the binder in the composition for an electrochemical device functional layer is preferably 10 parts by mass or more per 100 parts by mass of the particulate polymer, and is preferably 80 parts by mass or less, and more preferably 70 parts by mass or less per 100 parts by mass of the particulate polymer. When the content of the binder is not less than the lower limit set forth above, wet adhesiveness can be further improved. On the other hand, when the content of the binder is not more than any of the upper limits set forth above, reduction of ion conductivity of a functional layer can be inhibited, and cycle characteristics of an obtained electrochemical device can be improved.

In a case in which the composition for an electrochemical device functional layer contains subsequently described heat-resistant particles, the content of the binder in the composition for an electrochemical device functional layer is preferably 0.1 parts by mass or more, more preferably 0.2 parts by mass or more, and even more preferably 0.5 parts by mass or more per 100 parts by mass of the heat-resistant particles, and is preferably 20 parts by mass or less per 100 parts by mass of the heat-resistant particles. When the content of the binder is not less than any of the lower limits set forth above, wet adhesiveness can be further improved. On the other hand, when the content of the binder is not more than the upper limit set forth above, reduction of ion conductivity of a functional layer can be inhibited, and cycle characteristics of an obtained electrochemical device can be improved.

The binder can be produced through polymerization of a monomer composition containing monomers that can form the monomer units described above, carried out in an aqueous solvent such as water, for example, but is not specifically limited to being produced in this manner. The proportion constituted by each monomer in the monomer composition is normally the same as the proportion constituted by each monomer unit in the binder.

The method of polymerization of the binder is not specifically limited and may be a suspension polymerization method, an emulsion polymerization and aggregation method, a pulverization method, or the like, for example. Moreover, the polymerization reaction can be a reaction such as radical polymerization or living radical polymerization.

Although the binder may have a particulate form or may have a non-particulate form, it is preferable that the binder has a particulate form from a viewpoint of good inhibition of shedding of components that are contained in a functional layer.

### <Heat-resistant particles>

The presently disclosed composition for an electrochemical device functional layer preferably further contains heat-resistant particles. The further inclusion of heat-resistant particles in the composition for an electrochemical device functional layer can improve heat resistance of an obtained functional layer.

The heat-resistant particles are not specifically limited and may be particles formed of an inorganic material (i.e., inorganic particles) or particles formed of an organic material (i.e., organic particles) that are electrochemically stable and that are stably present in the environment of use of an electrochemical device. Note that inorganic particles or organic particles may be used by themselves as the heat-resistant particles, or inorganic particles and organic particles may be used in combination as the heat-resistant particles.

### <<Inorganic particles>>

The inorganic particles may be particles of an inorganic oxide such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or particles of clay such as talc or montmorillonite. These particles may be subjected to element substitution, surface treatment, solid solution treatment, or the like as necessary. Note that one type of inorganic particles may be used individually, or two or more types of inorganic particles may be used in combination.

### <<Organic particles>>

The organic particles are particles formed of a polymer that differs from the specific particulate polymer and the binder described above and that does not display adhesiveness. Examples of the organic particles include particles of various cross-linked polymers such as cross-linked polymethyl methacrylate, cross-linked polystyrene, cross-linked polydivinylbenzene, cross-linked styrene-divinylbenzene copolymer, polystyrene, polyimide, polyamide, polyamide imide, melamine resin, phenolic resin, and benzoguanamine-formaldehyde condensate, particles of heat-resistant polymers such as polysulfone, polyacrylonitrile, polyaramids, polyacetal, and thermoplastic polyimide, modified products and derivatives of any of the preceding examples, and heat-resistant organic particles disclosed in WO2019/065416A1. Note that one type of organic particles may be used individually, or two or more types of organic particles may be used in combination. Also note that the organic particles are formed of a polymer that is not adhesive as previously described. Specifically, the polymer forming the organic particles preferably has a glass-transition temperature of 150°C or higher.

Of the heat-resistant particles described above, inorganic particles and organic particles formed of a polymer having a glass-transition temperature of 150°C or higher are preferable from a viewpoint of further improving heat resistance, inorganic particles are more preferable, and particles formed of alumina (alumina particles), particles formed of boehmite (boehmite particles), particles formed of barium sulfate (barium sulfate particles), and particles formed of magnesium hydroxide (magnesium hydroxide particles) are even more preferable.

### <<Properties of heat-resistant particles>>

The volume-average particle diameter of the heat-resistant particles is preferably 0.1 µm or more, more preferably 0.2 µm or more, and even more preferably 0.3 µm or more, and is preferably 5.0 µm or less, more preferably 1.0 µm or less, and even more preferably 0.8 µm or less. When the volume-average particle diameter of the heat-resistant particles is 0.1 µm or more, reduction of ion conductivity of a functional layer caused by excessively dense packing of the heat-resistant particles in the functional layer can be inhibited, and cycle characteristics of an obtained electrochemical device can be improved. On the other hand, when the volume-average particle diameter of the heat-resistant particles is 1.0 µm or less, an electrochemical device member that includes a functional layer can be caused to sufficiently display excellent heat resistance even when the thickness of the functional layer is reduced. Consequently, heat resistance of the electrochemical device member can be sufficiently ensured while also increasing the capacity of an electrochemical device.

### <<Mixing ratio of heat-resistant particles and particulate polymer>>

A mixing ratio of the heat-resistant particles and the particulate polymer in the composition for an electrochemical device functional layer is preferably 91.5:8.5 to 54.5:45.5 as a mass ratio (heat-resistant particles:particulate polymer). When the mixing ratio of the heat-resistant particles and the particulate polymer as a mass ratio is within the range set forth above, this results in a better balance of heat resistance and adhesiveness of a functional layer.

### <Other components>

The composition for an electrochemical device functional layer may contain any other components besides the components described above. No specific limitations are placed on other components so long as they do not affect electrochemical reactions in an electrochemical device. For example, known additives such as dispersants, wetting agents, thickeners, suspension protectants, emulsifiers, defoamers, preservatives, and pH modifiers may be used as other components. One of these other components may be used individually, or two or more of these other components may be used in combination.

### <Production method of composition for electrochemical device functional layer>

No specific limitations are placed on the method by which the composition for an electrochemical device functional layer is produced. For example, the composition for an electrochemical device functional layer can be produced by mixing the above-described particulate polymer, binder, heat-resistant particles, water as a dispersion medium, and other components. Note that in a case in which the particulate polymer or the binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in the water dispersion may be used as the dispersion medium.

Although no specific limitations are placed on the mixing method of these components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

### (Composition precursor for electrochemical device functional layer)

The presently disclosed composition precursor for an electrochemical device functional layer contains a particulate polymer precursor that includes an alkoxy group-substituted aromatic ring-containing monomer unit and can optionally further contain a dispersion medium such as water.

Moreover, by using the presently disclosed composition precursor for an electrochemical device functional layer, it is possible to obtain a composition for an electrochemical device functional layer that contains the particulate polymer set forth above. Specifically, the composition for an electrochemical device functional layer containing the particulate polymer can be obtained by subjecting the composition precursor for an electrochemical device functional layer to the previously described hydroxy group substitution treatment in that form or can be obtained by isolating the particulate polymer precursor from the composition precursor for an electrochemical device functional layer, optionally performing drying of the particulate polymer precursor, and subsequently subjecting the obtained particulate polymer precursor to the previously described hydroxy group substitution treatment. Moreover, by using the composition for an electrochemical device functional layer containing the particulate polymer that is obtained, it is possible to obtain a functional layer for an electrochemical device.

### <Particulate polymer precursor>

The particulate polymer precursor that is contained in the presently disclosed composition precursor for an electrochemical device functional layer is a polymer that includes an alkoxy group-substituted aromatic ring-containing monomer unit as a repeating unit and can optionally further include other monomer units as repeating units, and that has a particulate form in the composition precursor for an electrochemical device functional layer.

Alkoxy group-substituted aromatic ring-containing monomers that can form the alkoxy group-substituted aromatic ring-containing monomer unit in the particulate polymer precursor, the type and preferred proportional content of the alkoxy group-substituted aromatic ring-containing monomer unit in the particulate polymer precursor, the types and preferred proportional contents of other monomer units in the particulate polymer precursor, the preferred properties of the particulate polymer precursor, and the production method of the particulate polymer precursor are the same as previously described in relation to the particulate polymer. For example, the preferred proportional content of the alkoxy group-substituted aromatic ring-containing monomer unit in the particulate polymer precursor is the same as the preferred proportional content of the hydroxy group-substituted aromatic ring-containing structural unit in the particulate polymer described above. Note that in the present disclosure, an "aromatic vinyl monomer unit" is considered to not be encompassed by the "alkoxy group-substituted aromatic ring-containing monomer unit" described above.

### <Production method of composition precursor for electrochemical device functional layer>

No specific limitations are placed on the method by which the composition precursor for an electrochemical device functional layer is produced. For example, the composition precursor for an electrochemical device functional layer can be produced by mixing the particulate polymer precursor described above with water or the like serving as a dispersion medium. Note that in a case in which the particulate polymer precursor has been produced through polymerization of a monomer composition in an aqueous solvent, the water dispersion of the polymer precursor can be used in that form as the composition precursor for an electrochemical device functional layer.

Although no specific limitations are placed on the mixing method, the mixing is preferably performed using a disperser as a mixing device in order to efficiently disperse the particulate polymer precursor. The disperser is preferably a device that can uniformly disperse the particulate polymer precursor in the dispersion medium. Examples of dispersers that can be used include a ball mill, a sand mill, a pigment disperser, a grinding machine, an ultrasonic disperser, a homogenizer, and a planetary mixer.

### (Functional layer for electrochemical device and laminate for electrochemical device)

The presently disclosed functional layer for an electrochemical device (hereinafter, also referred to simply as a "functional layer") is a layer that is formed using the composition for an electrochemical device functional layer set forth above. For example, the presently disclosed functional layer for an electrochemical device can be formed by applying the composition for an electrochemical device functional layer set forth above onto the surface (at one side or both sides) of a suitable substrate to form a coating film, and subsequently drying the coating film that is formed. In other words, the functional layer is formed of a dried product of the composition for an electrochemical device functional layer set forth above, contains at least the previously described particulate polymer, and optionally further contains one or more selected from the group consisting of a binder, heat-resistant particles, and other components.

Note that components contained in the functional layer are components that were contained in the composition for a functional layer and that the preferred ratio of each component is the same as the preferred ratio of each component in the composition for an electrochemical device functional layer. Moreover, the functional layer has excellent wet adhesiveness and is also capable of good inhibition of metal deposition on an electrode during charging and discharging and swelling of an electrochemical device as a result of being formed using the composition for an electrochemical device functional layer set forth above.

Furthermore, a laminate that is obtained by forming the functional layer at one side or both sides of a substrate can be used as the presently disclosed laminate for an electrochemical device (hereinafter, also referred to simply as a "laminate"), has excellent wet adhesiveness, and is capable of good inhibition of metal deposition on an electrode during charging and discharging and swelling of an electrochemical device.

### <Heat-resistant particle layer>

In a case in which the composition for an electrochemical device functional layer contains heat-resistant particles, the functional layer for an electrochemical device can have a structure in which the particulate polymer is partially embedded in a heat-resistant particle layer containing the heat-resistant particles (i.e., a structure in which the particulate polymer partially protrudes from a heat-resistant particle layer), but is not specifically limited to this structure.

### <<Thickness of heat-resistant particle layer>>

The thickness of the heat-resistant particle layer is preferably 0.5 µm or more, more preferably 0.8 µm or more, and even more preferably 1 µm or more, and is preferably 6 µm or less, more preferably 5 µm or less, and even more preferably 3.5 µm or less. When the thickness of the heat-resistant particle layer is not less than any of the lower limits set forth above, this results in an electrochemical device having extremely good heat resistance. On the other hand, when the thickness of the heat-resistant particle layer is not more than any of the upper limits set forth above, ion diffusivity of the functional layer can be ensured, and cycle characteristics of an obtained electrochemical device can be enhanced.

### <<Ratio of number-average particle diameter of particulate polymer relative to thickness of heat-resistant particle layer>>

A ratio of the number-average particle diameter of the particulate polymer relative to the thickness of the heat-resistant particle layer (number-average particle diameter of particulate polymer/thickness of heat-resistant particle layer) is preferably 1.0 or more, more preferably more than 1.0, and even more preferably 1.75 or more, and is preferably 5.0 or less, more preferably 4.5 or less, and even more preferably 4.25 or less.

When the ratio of the number-average particle diameter of the particulate polymer relative to the thickness of the heat-resistant particle layer is not less than any of the lower limits set forth above, even better wet adhesiveness can be displayed because it is even easier for the particulate polymer to protrude relative to the surface of the heat-resistant particles at a thickness direction surface of the functional layer. On the other hand, when the ratio of the number-average particle diameter of the particulate polymer relative to the thickness of the heat-resistant particle layer is not more than any of the upper limits set forth above, good wet adhesiveness can be displayed because there is a larger number of adhesion points of the particulate polymer, and metal deposition on an electrode during charging and discharging can also be further inhibited because optimal space is obtained between a separator and an electrode that are stacked with the functional layer in-between and concentration of metal ions such as lithium ions is inhibited.

The "thickness of the heat-resistant particle layer" referred to in the present disclosure can be measured by a method described in the EXAMPLES section. Moreover, the "number-average particle diameter of the particulate polymer" in the functional layer referred to in the present disclosure can be measured by a method described in the EXAMPLES section.

### <Substrate>

No limitations are placed on the substrate onto which the composition for an electrochemical device functional layer is applied. For example, a coating film of the composition for an electrochemical device functional layer may be formed on the surface of a releasable substrate, this coating film may be dried to form a functional layer, and then the releasable substrate may be peeled from the functional layer. The functional layer that is peeled from the releasable substrate in this manner can be used as a free-standing film in formation of a member of an electrochemical device. However, it is preferable that a separator substrate or an electrode substrate is used as the substrate from a viewpoint of raising electrochemical device member production efficiency since a step of peeling the functional layer can be omitted. A laminate obtained by forming the functional layer at one side or both sides of a separator substrate can be used well as a separator including the functional layer, whereas a laminate obtained by forming the functional layer at one side or both sides of an electrode substrate can be used well as an electrode including the functional layer.

### <<Separator substrate>>

The separator substrate on which the functional layer is formed is not specifically limited and can be any of those described in JP2012-204303A, for example. Of these separator substrates, a microporous membrane made of polyolefinic (polyethylene, polypropylene, polybutene, or polyvinyl chloride) resin is preferred because such a membrane can reduce the total thickness of the separator, which increases the ratio of electrode active material in an electrochemical device, and thereby increases the volumetric capacity of the electrochemical device. Note that the separator substrate may include any layer other than the functional layer that can display an expected function in part thereof.

### <<Electrode substrate>>

The electrode substrate (positive electrode substrate or negative electrode substrate) on which the functional layer is formed is not specifically limited and may be an electrode substrate that is obtained by forming an electrode mixed material layer on a current collector. The current collector, components in the electrode mixed material layer (for example, an electrode active material (positive electrode active material or negative electrode active material) and a binder for an electrode mixed material layer (binder for a positive electrode mixed material layer or binder for a negative electrode mixed material layer)), and the method by which the electrode mixed material layer is formed on the current collector can be known examples thereof such as any of those described in JP2013-145763A, for example. Note that the electrode substrate may include any layer other than the functional layer that has an expected function in part thereof.

### <Production method of functional layer and laminate>

No specific limitations are placed on the method by which the presently disclosed functional layer for an electrochemical device and laminate for an electrochemical device are produced. For example, a method in which a functional layer is formed on a releasable sheet and then this functional layer is transferred onto a substrate can be adopted. However, from a viewpoint of eliminating the need for a transfer operation and increasing production efficiency, the laminate is preferably produced through a step of supplying the composition for an electrochemical device functional layer onto the substrate (supply step) and a step of drying the composition for an electrochemical device functional layer that has been supplied onto the substrate (drying step).

### <<Supply step>>

In the supply step, the presently disclosed composition for an electrochemical device functional layer set forth above is supplied onto the substrate to form a coating film of the composition for an electrochemical device functional layer on the substrate. No specific limitations are placed on the method by which the composition for an electrochemical device functional layer is supplied onto the substrate, and the composition for an electrochemical device functional layer may be applied onto the surface of the substrate, or the substrate may be immersed in the composition for an electrochemical device functional layer. Moreover, it is preferable that the composition for an electrochemical device functional layer is applied onto the surface of the substrate because this makes it easy to control the thickness of the produced functional layer. Examples of methods by which the composition for an electrochemical device functional layer can be applied onto the substrate include, but are not specifically limited to, doctor blading, reverse roll coating, direct roll coating, gravure coating, bar coating, extrusion coating, and brush coating. Note that in the supply step, a coating film of the composition for an electrochemical device functional layer may be formed at just one side of the substrate, or coating films of the composition for an electrochemical device functional layer may be formed at both sides of the substrate.

### <<Drying step>>

In the drying step, the coating film of the composition for an electrochemical device functional layer that has been formed on the substrate in the supply step is dried so as to remove the dispersion medium and form a functional layer. The coating film of the composition for an electrochemical device functional layer can be dried by any commonly known method without any specific limitations. Examples of drying methods that can be used include drying by warm, hot, or low-humidity air; drying in a vacuum; and drying by irradiation with infrared light, electron beams, or the like. Although no specific limitations are placed on the drying conditions, the drying temperature is preferably 40°C to 150°C and the drying time is preferably 1 minute to 30 minutes.

Note that production of the presently disclosed laminate may involve performing the supply step and the drying step with respect to one side of the substrate to form a functional layer, and subsequently further performing the supply step and the drying step with respect to the other side of the substrate to form a functional layer.

### <Thickness of functional layer>

The thickness of the functional layer formed on the substrate (hereinafter, also referred to as the "maximum thickness of the functional layer") is preferably 1.0 µm or more, more preferably 1.5 µm or more, even more preferably 2.0 µm or more, particularly preferably 2.5 µm or more, and most preferably 5.0 µm or more, and is preferably 10.0 µm or less, more preferably 9.0 µm or less, and even more preferably 8.0 µm or less.

When the maximum thickness of the functional layer is not less than any of the lower limits set forth above, this results in an electrochemical device having extremely good heat resistance. On the other hand, when the maximum thickness of the functional layer is not more than any of the upper limits set forth above, ion diffusivity of the functional layer can be ensured, and cycle characteristics of an obtained electrochemical device can be enhanced.

Note that the "maximum thickness of the functional layer" referred to in the present disclosure can be measured using a field emission scanning electron microscope (FE-SEM), for example.

### (Electrochemical device)

The presently disclosed electrochemical device includes an electrode and a separator, and a feature thereof is that at least one of the electrode and the separator, and preferably the separator, includes the presently disclosed functional layer set forth above. The presently disclosed electrochemical device can inhibit deposition of metal on an electrode during charging and discharging and can also inhibit swelling as a result of the presently disclosed functional layer set forth above being used in at least one of the electrode and the separator. Note that in the electrochemical device including the functional layer, the particulate polymer contained in the functional layer may maintain a particulate form or may have any other form.

The presently disclosed electrochemical device may be, but is not specifically limited to, a lithium ion secondary battery, an electric double-layer capacitor, or a lithium ion capacitor, for example, and is preferably a lithium ion secondary battery.

Note that although the following gives a lithium ion secondary battery as one example of the presently disclosed electrochemical device and describes a case in which the presently disclosed functional layer set forth above is used in a separator of the lithium ion secondary battery, the presently disclosed electrochemical device is not limited thereto.

### <Positive electrode and negative electrode>

Electrodes that are formed of known electrode substrates (positive electrode substrate and negative electrode substrate) such as previously described in the "Substrate" section can be used as a positive electrode and a negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used.

Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used. The concentration of the electrolyte in the electrolyte solution can be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant stack as necessary to place the stack in a battery container, injecting the electrolyte solution into the battery container, and sealing the battery container. Note that the presently disclosed functional layer is used in at least one member among the positive electrode, the negative electrode, and the separator. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified. Moreover, in the case of a polymer that is produced through polymerization of a plurality of types of monomers, the proportion constituted in the polymer by a monomer unit formed through polymerization of a given monomer is normally, unless otherwise specified, the same as the ratio (charging ratio) of the given monomer among all monomers used in polymerization of the polymer.

Various measurements and evaluations in the examples and comparative example were performed according to the following methods.

### <Glass-transition temperature>

A particulate polymer in a dry state produced in each example or comparative example was taken to be a measurement sample. In addition, a water dispersion containing a binder produced in each example or comparative example was dried at a temperature of 25°C for 48 hours, and the resultant binder in a dry state was also taken to be a measurement sample. Each measurement sample was weighed into an aluminum pan in an amount of 10 mg and was measured by a differential scanning calorimeter (EXSTAR DSC6220 produced by SII NanoTechnology Inc.) under conditions prescribed in JIS Z 8703 with a measurement temperature range of -100°C to 500°C and a heating rate of 10°C/min and with an empty aluminum pan as a reference to obtain a differential scanning calorimetry (DSC) curve. In this heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

### <Measurement of weight-average molecular weight of tetrahydrofuran-soluble content>

A particulate polymer in a dry state that was produced in each example or comparative example was dispersed in deionized water to obtain a water dispersion. This water dispersion was loaded into a petri dish made of polytetrafluoroethylene and was dried at a temperature of 25°C for 48 hours to obtain a powdered sample.

Next, 0.3 g of the powdered sample was loaded into a 635-mesh wire netting that had been bent into a basket-like shape. The powdered sample in the basket-shaped wire netting was immersed in 50 g of tetrahydrofuran and was left at rest at 25°C for 24 hours.

Tetrahydrofuran was further added to the tetrahydrofuran solution present after immersion to produce a polymer solution of 0.5% in concentration, this polymer solution was filtered using a 1.0 µm membrane filter, and the filtrate was taken to be a measurement sample for gel permeation chromatography (GPC). Gel permeation chromatography was performed to measure the weight-average molecular weight of tetrahydrofuran-soluble content of the particulate polymer. Note that conditions of the mobile phase and column in GPC were as follows.
Apparatus name: HLC-8220GPC
Solvent: Tetrahydrofuran
Polymer solution concentration: 0.5% (10 mg/2 mL)
Column: TSKgel SuperMultiporeHZ-M
Calibration polymer: Calibration polystyrene.

### <Degree of swelling in electrolyte solution>

A particulate polymer in a dry state that was produced in each example or comparative example was dispersed in deionized water to obtain a water dispersion, and this water dispersion was loaded into a petri dish made of polytetrafluoroethylene. The water dispersion in the petri dish was dried at a temperature of 25°C for 48 hours to obtain a powdered sample. Approximately 0.2 g of the sample was pressed for 2 minutes at a temperature of 200°C and a pressure of 5 MPa to obtain a test specimen. The weight of the test specimen was measured and was taken to be WO.

Next, the test specimen was immersed in electrolyte solution (1.0 M LiPF₆ solution (solvent: mixed solvent of ethylene carbonate (EC)/ethyl methyl carbonate (EMC) = 3/7; additives: 2 volume% of vinylene carbonate and 2 mass% of fluoroethylene carbonate)) having a temperature of 60°C for 72 hours.

After this immersion, the test specimen was removed from the electrolyte solution, and electrolyte solution on the surface of the test specimen was wiped off. The weight of the test specimen after immersion was measured and was taken to be W1. The measured weights WO and W1 were used to calculate the degree of swelling in electrolyte solution (mass%) of the particulate polymer according to a formula: S = (W1/ WO) × 100.

### <Volume-average particle diameter of particulate polymer>

A particulate polymer in a dry state that was produced in each example or comparative example was taken to be a measurement sample. The measurement sample was weighed out in an amount equivalent to 0.1 g, was taken into a beaker, and 0.1 mL of alkylbenzenesulfonic acid aqueous solution (DRIWEL produced by FUJIFILM Corporation) as a dispersant was added thereto. In addition, 10 mL to 30 mL of a diluent (ISOTON II produced by Beckman Coulter, Inc.) was added into the beaker, and 3 minutes of dispersing was performed by a 20 W (Watt) ultrasonic disperser. Thereafter, a particle size analyzer (Multisizer produced by Beckman Coulter, Inc.) was used to measure the D50 by volume (volume-average particle diameter) of the measurement sample under conditions of an aperture diameter of 20 µm, a medium of ISOTON II, and a measured particle count of 100,000.

### <Volume-average particle diameter of binder>

The volume-average particle diameter of a binder produced in each example or comparative example was measured by laser diffraction. Specifically, a produced water dispersion containing the binder (adjusted to a solid content concentration of 0.1 mass%) was used as a sample. In a particle size distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

### <Thickness of heat-resistant particle layer>

A cross-section polisher was used to section a functional layer-equipped separator (laminate) produced in each example or comparative example in a stacking direction. Next, a field emission scanning electron microscope (FE-SEM) was used to observe the obtained laminate cross-section from a direction perpendicular thereto, and the thickness of a heat-resistant particle layer was calculated from an obtained image. Note that the thickness of the heat-resistant particle layer was taken to be the distance in a perpendicular direction from the surface of the separator at a side where the heat-resistant particle layer was formed to heat-resistant particles forming the surface of the heat-resistant particle layer.

### <Ratio of number-average particle diameter of particulate polymer relative to thickness of heat-resistant particle layer>

A cross-section polisher was used to section a functional layer-equipped separator (laminate) in a stacking direction. Next, a field emission scanning electron microscope (FE-SEM) was used to observe the laminate cross-section from a direction perpendicular thereto, the particle diameter of a particulate polymer was measured at 20 points from an obtained image, and an average value of the measured particle diameters was calculated. The calculated average value was taken to be the number-average particle diameter of the particulate polymer in the functional layer. Moreover, the number-average particle diameter was divided by the thickness of a heat-resistant particle layer to determine a ratio of the number-average particle diameter of the particulate polymer relative to the thickness of the heat-resistant particle layer.

### <Inhibition of metal deposition>

The metal deposition rate on an electrode during charging and discharging of an electrochemical device such as a secondary battery was measured by the following method as the lithium deposition area fraction on a negative electrode. Specifically, a lithium ion secondary battery produced in each example or comparative example was subjected to 10 cycles of charging and discharging at a constant current of 1.5C in a 10°C environment, and was finally charged to a state of charge (SOC) of 100% (metal deposition test). Next, the battery was disassembled inside of a glove box to take out a negative electrode, the area of lithium deposited on the surface of a negative electrode mixed material layer was determined, and the lithium deposition area fraction was calculated (= (area of deposited lithium/area of surface of negative electrode mixed material layer) × 100%). The lithium deposition area fraction was evaluated by the following standard. Note that a lower value for the lithium deposition area fraction indicates better inhibition of metal deposition on an electrode during charging and discharging.
A: Lithium deposition area fraction of less than 2%
B: Lithium deposition area fraction of not less than 2% and less than 5%
C: Lithium deposition area fraction of 5% or more

### <Adhesiveness after immersion in electrolyte solution (wet adhesiveness)>

A functional layer-equipped separator produced in each example or comparative example was cut out as a strip of 10 mm × 50 mm. The separator was arranged along a surface at the negative electrode mixed material layer-side of a negative electrode produced in each example or comparative example with a functional layer in-between so as to produce a laminate for evaluation including the functional layer-equipped separator and the negative electrode.

The obtained laminate for evaluation was cut out as a 20 mm × 80 mm strip and was placed in laminate packaging. After injecting approximately 300 µL of electrolyte solution into the laminate packaging and sealing the laminate packaging, the laminate for evaluation was left in an immersed state at a temperature of 25°C for 12 hours. Note that a 1.0 M LiPF₆ solution (solvent: mixed solvent of ethylene carbonate (EC)/ethyl methyl carbonate (EMC) = 3/7; additives: 2 volume% of vinylene carbonate and 2 mass% of fluoroethylene carbonate) was used as the electrolyte solution.

Thereafter, the laminate for evaluation was hot pressed for 20 minutes from above the packaging using a flat-plate press with a temperature of 80°C and a load of 0.5 kN to obtain a test specimen in which the functional layer-equipped separator and the negative electrode were adhered.

The obtained test specimen was taken out, and electrolyte solution attached to the surface thereof was wiped off. Thereafter, this test specimen was placed with the surface at the negative electrode-side facing downward, and cellophane tape (tape prescribed by JIS Z1522) was affixed to the surface at the negative electrode-side. Note that the cellophane tape was fixed to a horizontal test stage in advance. Thereafter, the stress when the separator was peeled off by pulling one end of the separator vertically upward at a pulling speed of 50 mm/min was measured. Three measurements were made in this manner, an average value of the stress was calculated, and the average value was taken to be the peel strength. Adhesiveness of the separator to the negative electrode after immersion in electrolyte solution was evaluated by the following standard based on the determined peel strength. The results are shown in Table 1. Note that a larger value for the peel strength indicates better adhesiveness of the separator to the negative electrode after immersion in electrolyte solution (i.e., wet adhesiveness).
A: Peel strength of 5.0 N/m or more
B: Peel strength of not less than 3.0 N/m and less than 5.0 N/m
C: Peel strength of less than 3.0 N/m

### <Inhibition of battery swelling>

After undergoing a metal deposition test as described above, a battery was disassembled inside a glove box under an argon gas atmosphere. A contact thickness gauge was used to measure the thickness of a laminate of a negative electrode, a separator, and a positive electrode. Battery swelling was calculated by the following formula. Note that a smaller value indicates better inhibition of battery swelling in accompaniment to charging and discharging. Battery swelling = (Total value for thickness of negative electrode, separator, and positive electrode after disassembly/Total value for thickness of negative electrode, separator, and positive electrode before electrolyte solution injection) × 100%
A: Battery swelling of less than 120%
B: Battery swelling of not less than 120% and less than 125%
C: Battery swelling of 125% or more

### (Example 1)

### <Production of water dispersion containing binder>

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition was produced in a separate vessel by mixing 50 parts of deionized water, 0.5 parts of sodium dodecylbenzenesulfonate as a dispersion stabilizer, 94 parts of n-butyl acrylate, 2 parts of methacrylic acid, 2 parts of acrylonitrile, 1 part of allyl methacrylate as a cross-linkable monomer, and 1 part of allyl glycidyl ether as a glycidyl group-containing monomer.

The obtained monomer composition was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder. The obtained binder had a volume-average particle diameter of 0.25 µm and a glass-transition temperature of -40°C.

### <Production of particulate polymer (A)>

### [Production of monomer composition]

A monomer composition was produced by mixing 25 parts of 3,4-dimethoxystyrene as an alkoxy group-substituted aromatic ring-containing monomer, 15 parts of glycidyl methacrylate as a glycidyl group-containing monomer, 35 parts of styrene as an aromatic vinyl monomer, 24.7 parts of n-butyl acrylate as a (meth)acrylic acid alkyl ester monomer unit, and 0.3 parts of ethylene glycol dimethacrylate as a cross-linkable monomer.

### [Production of metal hydroxide]

A colloidal dispersion liquid (A) containing magnesium hydroxide as a metal hydroxide was produced by gradually adding an aqueous solution of 7.0 parts of sodium hydroxide dissolved in 50 parts of deionized water to an aqueous solution of 10.0 parts of magnesium chloride dissolved in 200 parts of deionized water under stirring.

### [Suspension polymerization]

A particulate polymer precursor was produced by suspension polymerization. Specifically, the monomer composition described above was added to the colloidal dispersion liquid containing magnesium hydroxide, was further stirred therewith, and then 2.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition in the colloidal dispersion liquid containing magnesium hydroxide.

The magnesium hydroxide-containing colloidal dispersion liquid in which droplets of the monomer composition had been formed was loaded into a reactor, the temperature was raised to 90°C, and a polymerization reaction was performed for 5 hours to yield a water dispersion containing a particulate polymer precursor.

In addition, the water dispersion containing the particulate polymer precursor was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain the particulate polymer precursor in a dry state.

### [Conversion of methoxy groups in particulate polymer precursor to hydroxy groups (hydroxy group substitution treatment)]

After dissolving 100 g of the particulate polymer precursor in a dry state that had been obtained by the above-described procedure in 5,000 mL of dichloromethane (135-02446 produced by Wako Pure Chemical Industries, Ltd.) and performing nitrogen bubbling, 300 mL of boron tribromide (202207 produced by Sigma-Aldrich) solution of 75.7 g/L in concentration was added, and stirring was performed overnight at 0°C. After adding 2,500 mL of water to this solution, 5,000 mL of 2 M sodium chloride aqueous solution was used to perform centrifugal separation under conditions of 10,000 rpm, 15 minutes, and 5°C. Thereafter, 5,000 mL of methanol was used to perform centrifugal separation under conditions of 10,000 rpm, 15 minutes, and 5°C. The resultant particulate polymer was dried under vacuum conditions. The above yielded a particulate polymer (A) in a dry state that included a catechol structural unit where two methoxy groups on a benzene ring (aromatic ring) had been converted to hydroxy groups.

### <Production of slurry composition (composition for electrochemical device functional layer)>

A pre-mixing slurry was obtained by adding 0.5 parts of sodium polyacrylate as a dispersant to 70 parts of alumina (AKP3000 produced by Sumitomo Chemical Co., Ltd.; volume-average particle diameter: 0.7 µm) as heat-resistant fine particles, further adding deionized water so as to adjust the solid content concentration to 55%, and mixing these materials using a ball mill.

In addition, 5.0 parts of the binder, 25 parts of the particulate polymer (A), 1.5 parts of carboxymethyl cellulose as a thickener, and 0.2 parts of sodium dodecylbenzenesulfonate (NEOPELEX G-15 produced by Kao Corporation) as an emulsifier relative to 70 parts of heat-resistant fine particles contained in the pre-mixing slurry were mixed. The resultant mixture was added to the pre-mixing slurry. Deionized water was further added so as to adjust the solid content concentration to 40% and yield a slurry composition (composition for an electrochemical device functional layer).

### <Production of functional layer-equipped separator (laminate)>

A microporous membrane made of polyethylene (thickness: 12 µm) was prepared as a separator substrate. The composition for an electrochemical device functional layer obtained as described above was applied onto one side of the prepared separator substrate by bar coating. The coating film was dried at 50°C. Next, the same operations were performed with respect to the other side of the separator substrate to produce a functional layer-equipped separator (laminate) that included functional layers each having a heat-resistant particle layer thickness of 1.75 µm at both sides of the separator substrate.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was subsequently subjected to thermal-vacuum distillation to remove unreacted monomer. Thereafter, the mixture was cooled to 30°C or lower to yield a water dispersion containing the target binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2), and mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and then a further 15 minutes of mixing was performed at 25°C to obtain a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to yield a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

### <Production of lithium ion secondary battery>

An aluminum packing case was prepared as a battery case. The positive electrode was cut out as a square of 4 cm × 4 cm and was arranged with the surface at the aluminum foil (current collector) side thereof in contact with the aluminum packing case. Next, the functional layer-equipped separator was cut out as a square of 4.5 cm × 4.5 cm and was arranged on the surface of the positive electrode mixed material layer of the positive electrode. Next, the negative electrode was cut out as a square of 4.2 cm × 4.2 cm and was arranged on the separator such that the surface at the negative electrode mixed material layer-side faced toward a functional layer of the separator. Thereafter, a 1.0 M LiPF₆ solution (solvent: mixed solvent of ethylene carbonate (EC)/ethyl methyl carbonate (EMC) = 3/7; additives: 2 volume% of vinylene carbonate and 2 mass% of fluoroethylene carbonate) was loaded as an electrolyte solution. The aluminum packing case was closed by heat sealing at a temperature of 150°C so as to tightly seal an opening of the aluminum packing and produce a laminate cell-type secondary battery.

### (Example 2)

Various operations, measurements, and evaluations were performed in the same way as in Example 1 with the exception that a particulate polymer (B) produced as described below was used instead of the particulate polymer (A) in production of the slurry composition in Example 1. The results are shown in Table 1.

### <Production of particulate polymer (B)>

The particulate polymer (B) was produced by performing operations in the same way as in Example 1 with the exception that in production of the particulate polymer precursor, 3,4-dimethoxystyrene as an alkoxy group-substituted aromatic ring-containing monomer was changed from 25 parts to 5 parts and styrene as an aromatic vinyl monomer was changed from 35 parts to 55 parts.

### (Example 3)

Various operations, measurements, and evaluations were performed in the same way as in Example 1 with the exception that a particulate polymer (C) produced as described below was used instead of the particulate polymer (A) in production of the slurry composition in Example 1. The results are shown in Table 1.

### <Production of particulate polymer (C)>

The particulate polymer (C) was produced by performing operations in the same way as in Example 1 with the exception that in production of the particulate polymer precursor, 3,4-dimethoxystyrene as an alkoxy group-substituted aromatic ring-containing monomer was changed from 25 parts to 2 parts and styrene as an aromatic vinyl monomer was changed from 35 parts to 58 parts.

### (Example 4)

Various operations, measurements, and evaluations were performed in the same way as in Example 1 with the exception that a particulate polymer (D) produced as described below was used instead of the particulate polymer (A) in production of the slurry composition in Example 1. The results are shown in Table 1.

### <Production of particulate polymer (D)>

The particulate polymer (D) was produced by performing operations in the same way as in Example 1 with the exception that in production of the particulate polymer precursor, 3,4-dimethoxystyrene as an alkoxy group-substituted aromatic ring-containing monomer was changed from 25 parts to 40 parts and styrene as an aromatic vinyl monomer was changed from 35 parts to 20 parts.

### (Example 5)

Various operations, measurements, and evaluations were performed in the same way as in Example 1 with the exception that a particulate polymer (E) produced as described below was used instead of the particulate polymer (A) in production of the slurry composition in Example 1. The results are shown in Table 1.

### <Production of particulate polymer (E)>

The particulate polymer (E) was produced by performing operations in the same way as in Example 1 with the exception that in production of the particulate polymer precursor, 3,4-dimethoxystyrene as an alkoxy group-substituted aromatic ring-containing monomer was changed from 25 parts to 45 parts and styrene as an aromatic vinyl monomer was changed from 35 parts to 15 parts.

### (Example 6)

Various operations, measurements, and evaluations were performed in the same way as in Example 1 with the exception that a particulate polymer (F) produced as described below was used instead of the particulate polymer (A) in production of the slurry composition in Example 1. The results are shown in Table 1.

### <Production of particulate polymer (F)>

The particulate polymer (F) was produced by performing operations in the same way as in Example 1 with the exception that in production of the particulate polymer precursor, n-butyl acrylate as a (meth)acrylic acid alkyl ester monomer was changed from 24.7 parts to 23 parts and ethylene glycol dimethacrylate as a cross-linkable monomer was changed from 0.3 parts to 2 parts.

### (Example 7)

Various operations, measurements, and evaluations were performed in the same way as in Example 1 with the exception that a particulate polymer (G) produced as described below was used instead of the particulate polymer (A) in production of the slurry composition in Example 1. The results are shown in Table 1.

### <Production of particulate polymer (G)>

The particulate polymer (G) was produced by performing operations in the same way as in Example 1 with the exception that in production of the particulate polymer precursor, n-butyl acrylate as a (meth)acrylic acid alkyl ester monomer was changed from 24.7 parts to 24.3 parts and ethylene glycol dimethacrylate as a cross-linkable monomer was changed from 0.3 parts to 0.7 parts.

### (Example 8)

Various operations, measurements, and evaluations were performed in the same way as in Example 1 with the exception that a particulate polymer (H) produced as described below was used instead of the particulate polymer (A) in production of the slurry composition in Example 1. The results are shown in Table 1.

### <Production of particulate polymer (H)>

The particulate polymer (H) was produced by performing operations in the same way as in Example 1 with the exception that in production of the particulate polymer precursor, 3,4-dimethoxystyrene as an alkoxy group-substituted aromatic ring-containing monomer was changed from 25 parts to 5 parts, styrene as an aromatic vinyl monomer was changed from 35 parts to 0 parts, n-butyl acrylate as a (meth)acrylic acid alkyl ester monomer was changed from 24.7 parts to 79.9 parts, and ethylene glycol dimethacrylate as a crosslinkable monomer was changed from 0.3 parts to 0.1 parts.

### (Example 9)

Various operations, measurements, and evaluations were performed in the same way as in Example 1 with the exception that a particulate polymer (I) produced as described below was used instead of the particulate polymer (A) in production of the slurry composition in Example 1. The results are shown in Table 1.

### <Production of particulate polymer (I)>

The particulate polymer (I) was produced by performing operations in the same way as in Example 1 with the exception that in production of the particulate polymer precursor, 3,4-dimethoxystyrene as an alkoxy group-substituted aromatic ring-containing monomer was changed from 25 parts to 33 parts, styrene as an aromatic vinyl monomer was changed from 35 parts to 0 parts, and n-butyl acrylate as a (meth)acrylic acid alkyl ester monomer was changed from 24.7 parts to 49.7 parts.

### (Example 10)

Various operations, measurements, and evaluations were performed in the same way as in Example 1 with the exception that a particulate polymer (J) produced as described below was used instead of the particulate polymer (A) in production of the slurry composition in Example 1. The results are shown in Table 1.

### <Production of particulate polymer (J)>

The particulate polymer (J) was produced by performing operations in the same way as in Example 1 with the exception that in production of the particulate polymer precursor, t-butyl peroxy-2-ethylhexanoate as a polymerization initiator was changed from 2 parts to 4 parts and 1 part of t-dodecyl mercaptan (TDM) was added as a chain transfer agent.

### (Example 11)

Various operations, measurements, and evaluations were performed in the same way as in Example 1 with the exception that a particulate polymer (K) produced as described below was used instead of the particulate polymer (A) in production of the slurry composition in Example 1. The results are shown in Table 1.

### <Production of particulate polymer (K)>

The particulate polymer (K) was produced by performing operations in the same way as in Example 1 with the exception that in production of the particulate polymer precursor, t-butyl peroxy-2-ethylhexanoate as a polymerization initiator was changed from 2 parts to 4 parts and 0.5 parts of t-dodecyl mercaptan (TDM) was added as a chain transfer agent.

### (Example 12)

Various operations, measurements, and evaluations were performed in the same way as in Example 1 with the exception that a particulate polymer (L) produced as described below was used instead of the particulate polymer (A) in production of the slurry composition in Example 1. The results are shown in Table 1.

### <Production of particulate polymer (L)>

The particulate polymer (L) was produced by performing operations in the same way as in Example 1 with the exception that in production of the particulate polymer precursor, t-butyl peroxy-2-ethylhexanoate as a polymerization initiator was changed from 2 parts to 0.5 parts.

### (Example 13)

Various operations, measurements, and evaluations were performed in the same way as in Example 1 with the exception that a particulate polymer (M) produced as described below was used instead of the particulate polymer (A) in production of the slurry composition in Example 1. The results are shown in Table 1.

### <Production of particulate polymer (M)>

The particulate polymer (M) was produced by performing operations in the same way as in Example 1 with the exception that in production of the particulate polymer precursor, t-butyl peroxy-2-ethylhexanoate as a polymerization initiator was changed from 2 parts to 0.3 parts.

### (Example 14)

Various operations, measurements, and evaluations were performed in the same way as in Example 1 with the exception that a particulate polymer (N) produced as described below was used instead of the particulate polymer (A) in production of the slurry composition in Example 1. The results are shown in Table 1.

### <Production of particulate polymer (N)>

The particulate polymer (N) was produced by performing operations in the same way as in Example 1 with the exception that in production of the particulate polymer precursor, a colloidal dispersion liquid (B) was used instead of the colloidal dispersion liquid (A) containing magnesium hydroxide as a metal hydroxide. The colloidal dispersion liquid (B) was produced by gradually adding an aqueous solution of 9.0 parts of sodium hydroxide dissolved in 50 parts of deionized water to an aqueous solution of 12.8 parts of magnesium chloride dissolved in 200 parts of deionized water under stirring.

### (Example 15)

Various operations, measurements, and evaluations were performed in the same way as in Example 1 with the exception that a particulate polymer (O) produced as described below was used instead of the particulate polymer (A) in production of the slurry composition in Example 1. The results are shown in Table 1.

### <Production of particulate polymer (O)>

The particulate polymer (O) was produced by performing operations in the same way as in Example 1 with the exception that in production of the particulate polymer precursor, a colloidal dispersion liquid (C) was used instead of the colloidal dispersion liquid (A) containing magnesium hydroxide as a metal hydroxide. The colloidal dispersion liquid (C) was produced by gradually adding an aqueous solution of 8.6 parts of sodium hydroxide dissolved in 50 parts of deionized water to an aqueous solution of 12.3 parts of magnesium chloride dissolved in 200 parts of deionized water under stirring.

### (Example 16)

Various operations, measurements, and evaluations were performed in the same way as in Example 1 with the exception that a particulate polymer (P) produced as described below was used instead of the particulate polymer (A) in production of the slurry composition in Example 1. The results are shown in Table 1.

### <Production of particulate polymer (P)>

The particulate polymer (P) was produced by performing operations in the same way as in Example 1 with the exception that in production of the particulate polymer precursor, a colloidal dispersion liquid (D) was used instead of the colloidal dispersion liquid (A) containing magnesium hydroxide as a metal hydroxide. The colloidal dispersion liquid (D) was produced by gradually adding an aqueous solution of 7.0 parts of sodium hydroxide dissolved in 50 parts of deionized water to an aqueous solution of 10.0 parts of magnesium chloride dissolved in 200 parts of deionized water under stirring.

### (Example 17)

Various operations, measurements, and evaluations were performed in the same way as in Example 1 with the exception that a particulate polymer (Q) produced as described below was used instead of the particulate polymer (A) in production of the slurry composition in Example 1. The results are shown in Table 1.

### <Production of particulate polymer (Q)>

The particulate polymer (Q) was produced by performing operations in the same way as in Example 1 with the exception that in production of the particulate polymer precursor, a colloidal dispersion liquid (E) was used instead of the colloidal dispersion liquid (A) containing magnesium hydroxide as a metal hydroxide. The colloidal dispersion liquid (E) was produced by gradually adding an aqueous solution of 6.7 parts of sodium hydroxide dissolved in 50 parts of deionized water to an aqueous solution of 9.6 parts of magnesium chloride dissolved in 200 parts of deionized water under stirring.

### (Example 18)

Various operations, measurements, and evaluations were performed in the same way as in Example 1 with the exception that a particulate polymer (R) produced as described below was used instead of the particulate polymer (A) in production of the slurry composition in Example 1. The results are shown in Table 1.

### <Production of particulate polymer (R)>

The particulate polymer (R) was produced by performing operations in the same way as in Example 1 with the exception that in production of the particulate polymer precursor, a colloidal dispersion liquid (F) was used instead of the colloidal dispersion liquid (A) containing magnesium hydroxide as a metal hydroxide. The colloidal dispersion liquid (F) (colloidal dispersion liquid containing magnesium hydroxide) was produced by gradually adding an aqueous solution of 5.5 parts of sodium hydroxide dissolved in 50 parts of deionized water to an aqueous solution of 7.9 parts of magnesium chloride dissolved in 200 parts of deionized water under stirring.

### (Example 19)

Various operations, measurements, and evaluations were performed in the same way as in Example 1 with the exception that a particulate polymer (S) produced as described below was used instead of the particulate polymer (A) in production of the slurry composition in Example 1. The results are shown in Table 1.

### <Production of particulate polymer (S)>

The particulate polymer (S) was produced by performing operations in the same way as in Example 1 with the exception that in production of the particulate polymer precursor, a colloidal dispersion liquid (G) was used instead of the colloidal dispersion liquid (A) containing magnesium hydroxide as a metal hydroxide. The colloidal dispersion liquid (G) was produced by gradually adding an aqueous solution of 5.3 parts of sodium hydroxide dissolved in 50 parts of deionized water to an aqueous solution of 7.6 parts of magnesium chloride dissolved in 200 parts of deionized water under stirring.

### (Comparative Example 1)

Various operations, measurements, and evaluations were performed in the same way as in Example 1 with the exception that a particulate polymer (T) produced as described below was used instead of the particulate polymer (A) in production of the slurry composition in Example 1. The results are shown in Table 1.

### <Production of particulate polymer (T)>

The particulate polymer (T) was produced by performing operations in the same way as in Example 1 with the exception that in production of the particulate polymer precursor, 3,4-dimethoxystyrene as an alkoxy group-substituted aromatic ring-containing monomer was changed from 24 parts to 0 parts, styrene as an aromatic vinyl monomer was changed from 35 parts to 60 parts, and hydroxy group substitution treatment was not performed.

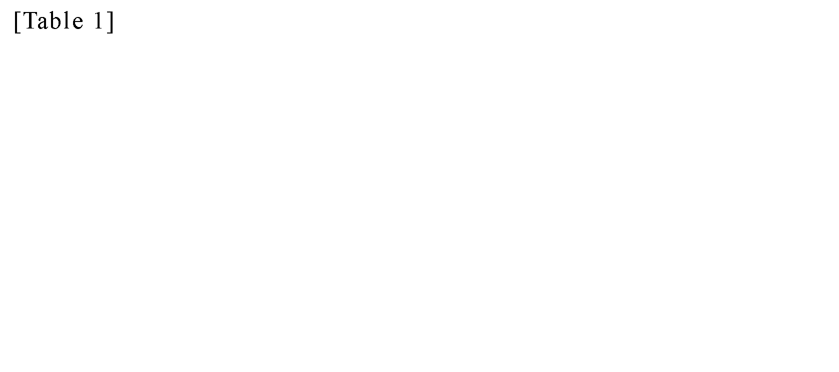

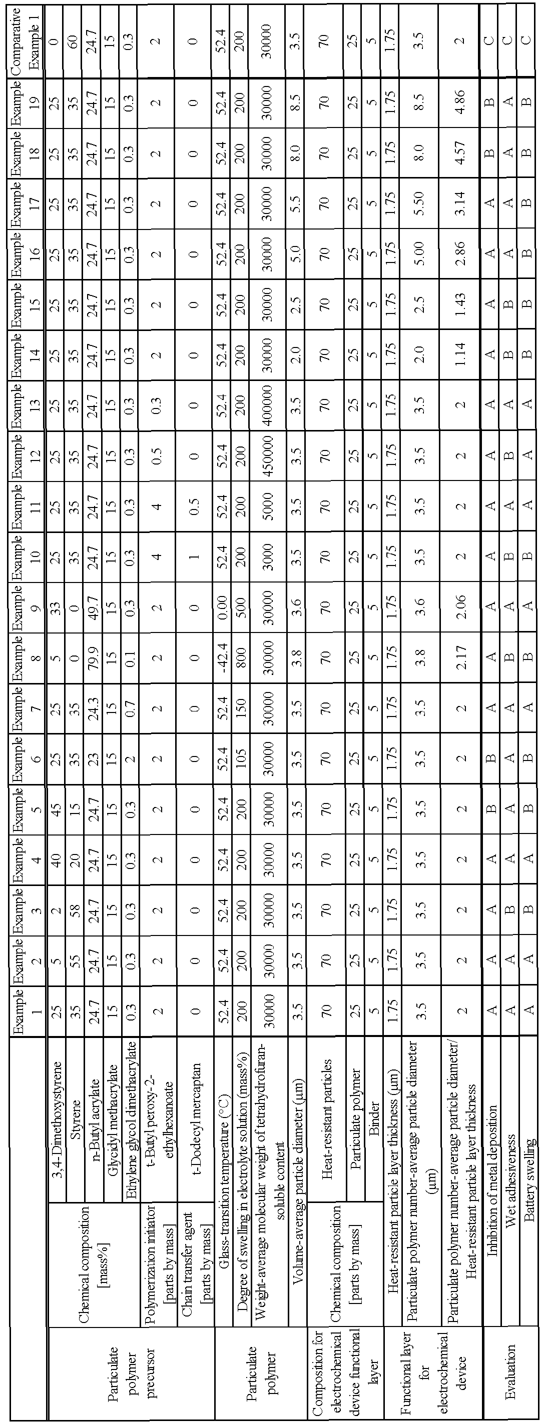

It can be seen from the results shown in Table 1 that by using a composition for an electrochemical device functional layer that contains a particulate polymer including a structural unit that includes a group having an aromatic ring where at least one hydrogen atom is substituted with a hydroxy group, an obtained functional layer displays excellent wet adhesiveness and is capable of good inhibition of metal deposition on an electrode during charging and discharging and swelling of an electrochemical device.

### INDUSTRIAL APPLICABILITY

According to the present disclosure, it is possible to provide a composition for an electrochemical device functional layer with which it is possible to form a functional layer that has excellent wet adhesiveness and that is capable of good inhibition of metal deposition on an electrode during charging and discharging and swelling of an electrochemical device. Moreover, according to the present disclosure, it is possible to provide a composition precursor for an electrochemical device functional layer with which it is possible to suitably obtain this composition for an electrochemical device functional layer.

Furthermore, according to the present disclosure, it is possible to provide a functional layer for an electrochemical device that has excellent wet adhesiveness and that is capable of good inhibition of metal deposition on an electrode during charging and discharging and swelling of an electrochemical device.

Also, according to the present disclosure, it is possible to provide a laminate for an electrochemical device in which this functional layer for an electrochemical device is stacked on a substrate.

Moreover, according to the present disclosure, it is possible to provide an electrochemical device that includes this functional layer for an electrochemical device.

## Claims

1. A composition for an electrochemical device functional layer comprising a particulate polymer, wherein the particulate polymer includes a structural unit that includes a group having an aromatic ring where at least one hydrogen atom is substituted with a hydroxy group.

2. The composition for an electrochemical device functional layer according to claim 1, wherein the particulate polymer has a degree of swelling in electrolyte solution of not less than 100% and not more than 1,000%.

3. The composition for an electrochemical device functional layer according to claim 1, wherein tetrahydrofuran-soluble content of the particulate polymer has a weight-average molecular weight of not less than 1,000 and not more than 500,000.

4. The composition for an electrochemical device functional layer according to claim 1, wherein the particulate polymer has a glass-transition temperature of not lower than 0°C and not higher than 90°C.

5. The composition for an electrochemical device functional layer according to claim 1, wherein the particulate polymer includes the structural unit that includes a group having an aromatic ring where at least one hydrogen atom is substituted with a hydroxy group in a proportion of not less than 1 mass% and not more than 50 mass%.

6. The composition for an electrochemical device functional layer according to claim 1, wherein the particulate polymer further includes a crosslinkable monomer unit.

7. The composition for an electrochemical device functional layer according to claim 1, further comprising heat-resistant particles.

8. A composition precursor for an electrochemical device functional layer comprising a particulate polymer precursor including a monomer unit that includes a group having an aromatic ring where at least one hydrogen atom is substituted with an alkoxy group.

9. A functional layer for an electrochemical device formed using the composition for an electrochemical device functional layer according to any one of claims 1 to 7.

10. A laminate for an electrochemical device comprising the functional layer for an electrochemical device according to claim 9, stacked on a substrate.

11. An electrochemical device comprising the functional layer for an electrochemical device according to claim 9.
